**Europäisches Patentamt**

**European Patent Office**

**Office européen des brevets**

(11) Veröffentlichungsnummer: **0 342 528**
**A2**

## (12) EUROPÄISCHE PATENTANMELDUNG

(21) Anmeldenummer: **89108527.6**

(22) Anmeldetag: **11.05.89**

(51) Int. Cl.⁴: **G05B 19/18**

(30) Priorität: **19.05.88 DE 3816997**
**10.09.88 DE 3830854**

(43) Veröffentlichungstag der Anmeldung:
**23.11.89 Patentblatt 89/47**

(84) Benannte Vertragsstaaten:
**CH DE FR GB IT LI**

(71) Anmelder: **Fortuna-Werke Maschinenfabrik GmbH**
**Pragstrasse 140**
**D-7000 Stuttgart 50(DE)**

(72) Erfinder: **Wedeniwski, Horst Josef, Dr.**
**Beutelsbachstrasse 8/1**
**D-7064 Remshalde-Grunbach(DE)**

(74) Vertreter: **Witte, Alexander, Dr.-Ing. et al**
**Schickhardtstrasse 24**
**D-7000 Stuttgart(DE)**

(54) **Verfahren zum Schleifen von Nocken einer Nockenwelle.**

(57) Ein Verfahren dient zum Schleifen von Nocken einer Nockenwelle (12) mittels einer numerisch gesteuerten Nockenwellen-Schleifmaschine (10). Die Nockenwelle (12) ist in einer Werkstückaufnahme (11) mit vorgegebener Winkelgeschwindigkeit ( $\omega$ ) in vorbestimmten Winkelschritten um ihre Längsachse drehbar angeordnet. Ein Schleifschlitten (17) mit einer Schleifscheibe (18) ist in einer Achse (20) senkrecht zur Längsachse in vorgegebenen Schritten zustellbar. In Abhängigkeit von der Geometrie, dem Werkstoff und der gewünschten Oberflächenbeschaffenheit der Nockenwelle (12) und der Nocken (30) wird eine Schleifscheibe (18) in ihrer Beschaffenheit zur Bearbeitung ausgewählt und die Zustellung der Schleifscheibe (18) eingestellt.

Um eine minimale Schleifzeit bei Berücksichtigung verschiedener prozeßbedingter Restriktionen zu erzielen, wird über das maximal bezogene Zeitspanvolumen und die vorgegebene Nockengeometrie eine maximal mögliche Zustellung für eine minimale Schleifzeit ermittelt und - ggf. unter Berücksichtigung von Restriktionen hinsichtlich der Spanraumfüllungsverhältnisse und der Kornbelastung - die maximale Zustellung zum Schleifen der Nockenwelle (12) eingestellt.

Fig.1

EP 0 342 528 A2

## Verfahren zum Schleifen von Nocken einer Nockenwelle

Die Erfindung betrifft ein Verfahren zum Schleifen von Nocken einer Nockenwelle mittels einer numerisch gesteuerten Nockenwellen-Schleifmaschine, bei der die Nockenwelle in einer Werkstückaufnahme mit vorgegebener Winkelgeschwindigkeit in vorbestimmten Winkelschritten um ihre Längsachse drehbar angeordnet ist und ein Schleifschlitten mit einer Schleifscheibe in einer Achse senkrecht zur Längsachse in vorgegebenen Schritten zustellbar ist, wobei in Abhängigkeit von der Geometrie, dem Werkstoff und der gewünschten Oberflächenbeschaffenheit der Nockenwelle und der Nocken eine Schleifscheibe in ihrer Beschaffenheit zur Bearbeitung ausgewählt und die Zustellung der Schleifscheibe eingestellt wird.

Ein Verfahren der vorstehend genannten Art ist allgemein bekannt. So sind in der DE-Z "Werkstatt und Betrieb", 1985, Seiten 443 bis 448; 1986, Seiten 655 bis 660; 1987, Seiten 269 bis 274 und 1988, Seiten 201 bis 206 verschiedene Verfahren beschrieben, mit denen Produktions-Nockenformschleifmaschinen in Abhängigkeit von verschiedenen Parametern, u.a. auch der Geometrie die Nocken sowie der Nockenwelle und des verwendeten Werkstoffs gesteuert werden.

Schließlich ist aus der Dissertation von Yegenoglu "Berechnung von Topographiekenngrößen zur Auslegung von CBN-Schleifprozessen", Fakultät für Maschinenwesen der Rheinisch-Westfälischen Technischen Hochschule Aachen, 1986, ein mathematisches Modell bekannt, um Topographiekenngrößen von Außenrund-Schleifvorgängen zu ermitteln und daraus Strategien zur Prozeßauslegung abzuleiten.

Bei den eingangs zunächst genannten Verfahren, wie sie beim Nockenformschleifen eingesetzt werden, hat man zwar versucht, bestimmte Einzelaspekte des Nockenformschleifens durch mathematische Modelle zu erfassen und daraus Prozeßparameter abzuleiten, das Schwergewicht dieser Bemühungen lag jedoch in der Formtreue, d.h. der Maßhaltigkeit der geschliffenen Nocken, während wirtschaftliche Kriterien allenfalls am Rande berücksichtigt worden sind.

In der Arbeit von Yegenoglu sind zwar auch wirtschaftliche Gesichtspunkte berücksichtigt worden, jedoch bezieht sich jenes bekannte Modell auf allgemeine Außenrundschleifvorgänge und es fehlt ein geschlossenes System, um die gefundenen Modellvorstellungen in eine Produktionsstrategie umzusetzen.

Der Erfindung liegt demgegenüber die Aufgabe zugrunde, ein Verfahren der eingangs genannten Art dahingehend weiterzubilden, daß die physikalischen Mechanismen des Nockenformschleifens mit Werkzeugspezifikationen und Prozeßparametern in einen geschlossenen Wirkungskreis 'gebracht werden, um unter wirtschaftlichen Gesichtspunkten, d.h. bei minimaler Schleifzeit, unter möglichst vollkommener Ausnutzung des physikalisch Möglichen ein Optimum zu finden.

Diese Aufgabe wird erfindungsgemäß durch die folgenden Verfahrensschritte gelöst:
- Bestimmen einer minimalen Schleifzeit aus der Geometrie der Nocken sowie der maximalen Winkelgeschwindigkeit;
- Bestimmen eines maximalen bezogenen Zeitspanvolumens in Abhängigkeit von der maximalen Antriebsleistung des Schleifscheibenantriebes;
- Bestimmen eines maximalen zerspanten Werkstückvolumens aus der minimalen Schleifzeit sowie dem maximalen bezogenen Zeitspanvolumen;
- Bestimmen einer maximalen Zustellung aus dem maximalen zerspanten Werkstückvolumen und der Geometrie der Nocken;
- Bestimmen eines Schleifscheibentyps aus einer Tabelle vorgegebener Schleifscheibentypen in Abhängigkeit von der vorgegebenen Rauhtiefe fer Nocken;
- Schleifen der Nocken mittel der bestimmten Schleifscheibe unter Einstellung der maximalen Zustellung.

Die der Erfindung zugrundeliegende Aufgabe wird auf diese Weise vollkommen gelöst. Es wird nämlich erstmalig von den beiden kritischsten Größen des Schleifprozesses ausgegangen, nämlich der maximal möglichen Winkelgeschwindigkeit der sogenannten C-Achse einerseits und der Antriebsleistung der Schleifscheibe andererseits, um über die spezielle Geometrie der zu bearbeitenden Nocken der Nockenwelle ein maximales bezogenes Zeitspanvolumen als kritische Kenngröße des erfindungsgemäßen Verfahrens zu ermitteln. Dieses maximale bezogene Zeitspanvolumen bestimmt dann seinerseits wiederum über die Geometrie der Nocken die maximale Zustellung und zwar derart, daß bei Einstellung dieser Zustellung die Schleifmaschine gerade an der Grenze ihrer möglichen Leistungsdaten betrieben wird. Über die Vorgabe einer endlichen Menge real verfügbarer Schleifscheiben kann dann je nach gewünschter Oberflächenqualität, d.h. je nach gewünschter Rauhtiefe, eine zugehörige Schleifscheibe ermittelt werden, um dann den Nockenformschleifprozeß ablaufen zu lassen.

Bei einer bevorzugten weiteren Ausbildung des erfindungsgemäßen Verfahrens werden die folgenden Schritte zusätzlich eingesetzt:
- Bestimmen des Spanraumfüllungsgrades aus dem maximalen bezogenen Zeitspanvolumen;

- Vergleichen des ermittelten Spanraumfüllungsgrades mit einem Grenzwert;
- Vermindern des maximalen bezogenen Zeitspanvolumens, bis der Spanraumfüllungsgrad den Grenzwert nicht überschreitet;
- Bestimmen der zugehörigen maximalen Zustellung aus dem verminderten maximalen bezogenen Zeitspanvolumen;
- Schleifen der Nocken mittels der bestimmten Schleifscheibe unter Einstellung der maximalen Zustellung.

Diese Maßnahmen haben den Vorteil, daß zusätzlich zu den bereits erwähnten Grenzdaten der maximalen Winkelgeschwindigkeit in der C-Achse und der Leistung des Schleifscheibenantriebes noch der physikalische Prozeß der Spanabnahme durch die Schneiden der Körner der Schleifscheibe berücksichtigt wird und zwar in der Weise, daß der Spanraumfüllungsgrad, d.h. das Verhältnis von Einzelspanvolumen und Spanraumvolumen, einen bestimmten Grenzwert nicht überschreiten soll. Auch hier fließen als physikalische Prozesse wieder die Topographie der Schleifscheibe über den Spanraum zwischen den Körnern der Schleifscheibe einerseits und die Größe der abgetragenen Werkstoffspäne ein.

Bei einer weiteren bevorzugten Ausgestaltung der Erfindung werden die folgenden weiteren Schritte eingesetzt:
- Bestimmen der Einzelkornkraft aus dem maximalen bezogenen Zeitspanvolumen;
- Vergleichen der ermittelten Einzelkornkraft mit einem zweiten Grenzwert;
- Vermindern des maximalen bezogenen Zeitspanvolumens, bis die Einzelkornkraft den zweiten Grenzwert nicht überschreitet;
- Bestimmen der zugehörigen maximalen Zustellung aus dem verminderten maximalen bezogenen Zeitspanvolumen;
- Schleifen der Nocken mittels der bestimmten Schleifscheibe unter Einstellung der maximalen Zustellung.

Diese Maßnahme hat den Vorteil, daß als weiterer Prozeßparameter die Belastbarkeit der Körner der Schleifscheibe angezogen wird, um zu verhindern, daß bei zu hoher Schleifleistung ein vorzeitiger übergroßer Verschleiß der Schleifscheibe eintritt. Auch in diesem Falle wird also im Interesse der Erfüllung dieser Nebenbedingung eine gewisse Verminderung der Schleifleistung in Kauf genommen.

Bei einer weiteren bevorzugten Ausgestaltung des erfindungsgemäßen Verfahrens wird aus einer weiteren Randbedingung ein maximales bezogenes Zeitspanvolumen bestimmt und das jeweils größere Zeitspanvolumen zur Bestimmung der maximalen Zustellung zum Schleifen der Nocken herangezogen.

Diese Maßnahme hat den Vorteil, daß zusätzlich zu den bereits genannten Randbedingungen wiederum über die zentrale Prozeßgröße, nämlich das maximale bezogene Zeitspanvolumen, weitere Randbedingungen berücksichtigt werden, die sich aus empirisch ermittelten Abhängigkeiten ergeben. Auch in diesem Fall wird also im Interesse der Berücksichtigung weiterer Randbedingungen eine gewisse Verminderung der Schleifleistung, d.h. eine Erhöhung der Bearbeitungszeit in Kauf genommen, um zusätzliche Randbedingungen je nach Zweckmäßigkeit erfüllen zu können.

Diese zusätzlichen Randbedingungen können in weiteren Ausgestaltungen des erfindungsgemäßen Verfahrens die Rauhtiefe von Nocken und Schleifscheibe oder der Formfehler der Nocken oder die Schnittleistung der Nockenwellenschleifmaschine oder der Verschleiß der Schleifscheibe oder die Randzonentemperatur der Nocken oder das zerspante Werkstückvolumen sein.

Berücksichtigt man alle vorgenannten Randbedingungen als Grenzen des erreichbaren Optimums an Schleifzeit, so gelangt man schließlich zu einem geschlossenen Konzept für das Nockenformschleifen, bei dem das theoretisch Mögliche des Verbundes aus Nockenformschleifmaschine, Schleifscheibe, Konditionierung der Schleifscheibe und Werkstück, hinsichtlich dessen Geometrie und Werkstoff erreicht wird. Selektiv können nun einzelne Randbedingungen wiederum vernachlässigt werden, um dann unter Inkaufnahme gewisser Einschränkungen eine weitere Verminderung der Schleifzeit zu erreichen.

Das erfindungsgemäße Verfahren eignet sich in besonderem Maße zum benutzergesteuerten Betrieb einer Nockenformschleifmaschine über eine Bildschirm-Menüsteuerung mit Graphik-Dialog, bei der dem Benutzer der Schleifmaschine nacheinander Bildschirmmasken vorgegeben werden, in die er die noch fehlenden Kennwerte der jeweiligen Bearbeitungsaufgabe einsetzen kann. Die numerische Steuerung der Schleifmaschine wählt dann aus den fix vorgegebenen sowie ein variabel eingegebenen Parametern die jeweils optimale Schleifscheibe aus einem abgespeicherten Katalog real verfügbarer Schleifscheiben aus und stellt selbsttätig die erforderlichen Prozeßparameter der Nockenformschleifmaschine, insbesondere also die Bewegung der C-Achse, d.h. der Drehachse der Nockenwelle sowie der X-Achse, d.h. des Verfahrweges des Schleifschlittens, ein.

Es hat sich in praktischen Versuchen gezeigt, daß die mit dem erfindungsgemäßen Verfahren erzielbare Optimierung von Schleifprozessen zu einer drastischen Reduzierung von Schleifzeiten führt, so daß Nockenwellen im Produktionsprozeß mit einer deutlich erhöhten Ausbringung geschliffen werden können, wobei gleichzeitig die Schleifscheibe einem optimal niedrigen Verschleiß ausgesetzt und auch die Konditionierung der Schleifscheibe optimal in den Schleifprozeß integriert ist.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1 eine Seitenansicht, äußerst schematisiert und teilweise im Schnitt entlang der Linie I-I von Fig. 2, einer Nockenformschleifmaschine, wie sie zur Ausführung des erfindungsgemäßen Verfahrens eingesetzt werden kann;

Fig. 2 eine Draufsicht auf die in Fig. 1 dargestellte Nockenformschleifmaschine;

Fig. 3 eine Detailansicht, in stark vergrößertem Maßstabe, auf einen in Bearbeitung befindlichen Nocken zur Erläuterung diverser Betriebsparameter;

Fig. 4 eine Seitenansicht auf eine Nockenwelle, wie sie nach dem erfindungsgemäßen Verfahren bearbeitet werden kann;

Fig. 5 in äußerst stark vergrößertem Maßstabe eine perspektrivische Ansicht eines oktaedrischen CBN-Kornes, wie es in modernen Schleifscheiben verwendet wird;

Fig. 6 eine Teilansicht, im Schnitt und in stark vergrößertem Maßstabe einer Oberfläche einer CBN-Schleifscheibe;

Fig. 7 eine perspektivische Ansicht zur Erläuterung eines abgespanten Werkstückvolumens;

Fig. 8 eine Darstellung ähnlich Fig. 3, zur Erläuterung der beim erfindungsgemäßen Verfahren wirksamen Geschwindigkeiten von Schleifscheibe und Nocken;

Fig. 9 ein Diagramm zur Erläuterung von Randbedingungen, wie sie beim erfindungsgemäßen Verfahren berücksichtigt werden;

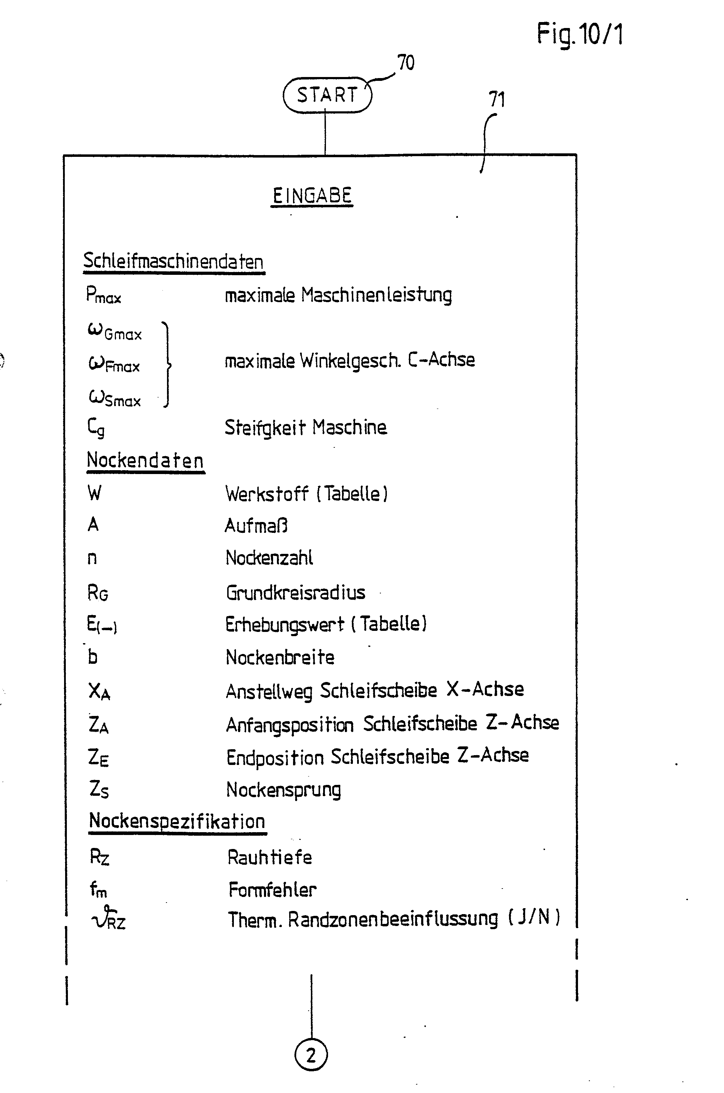

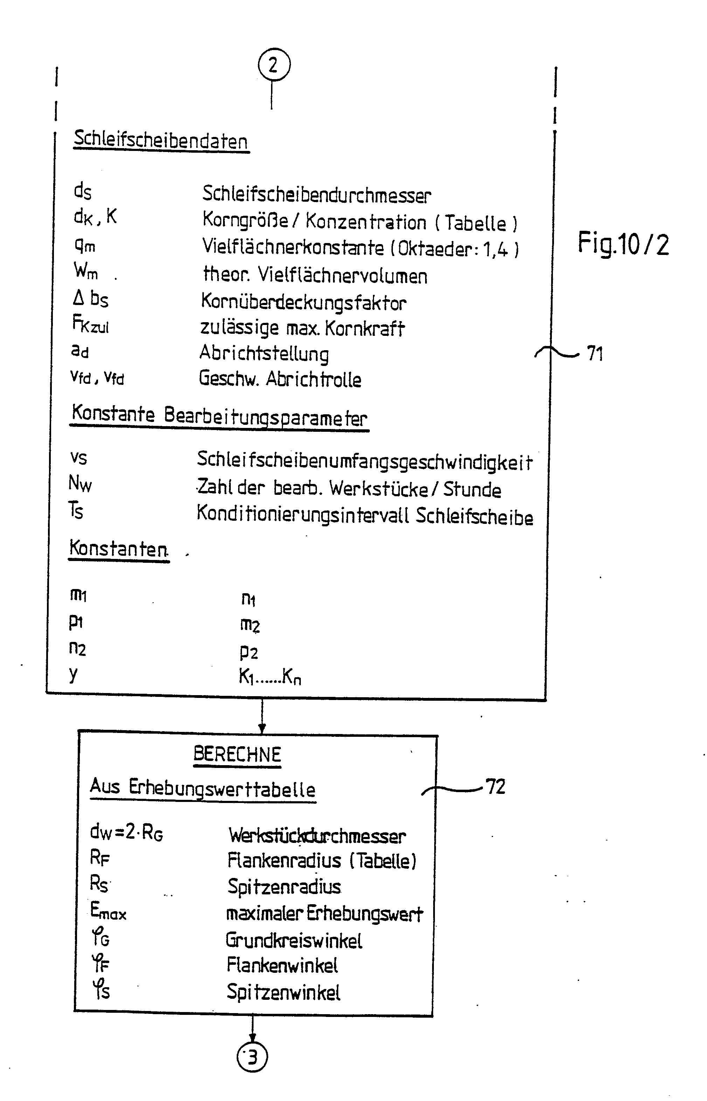

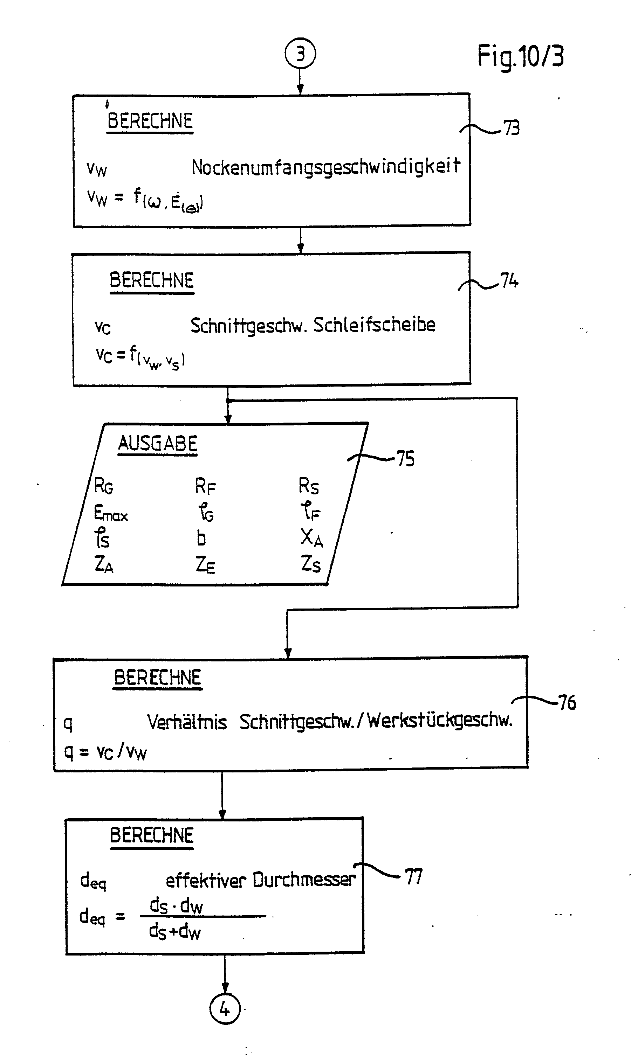

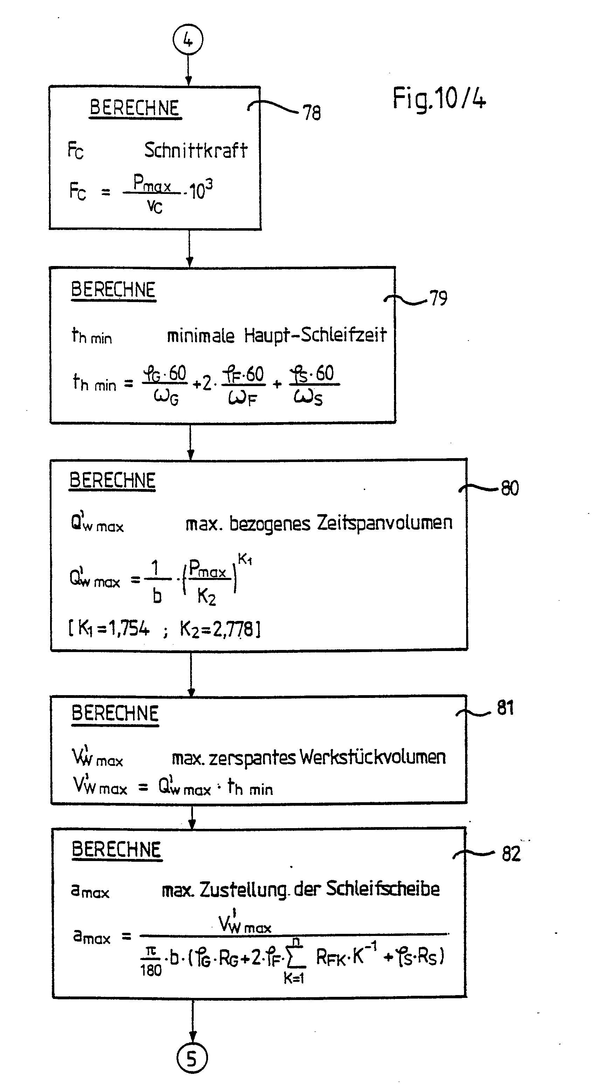

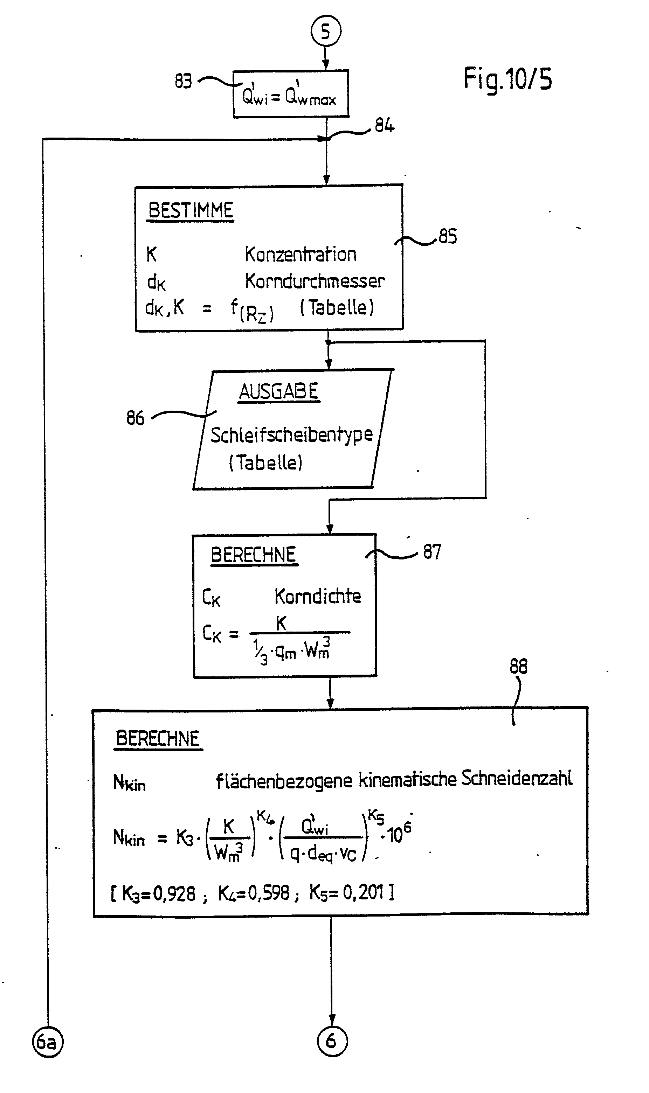

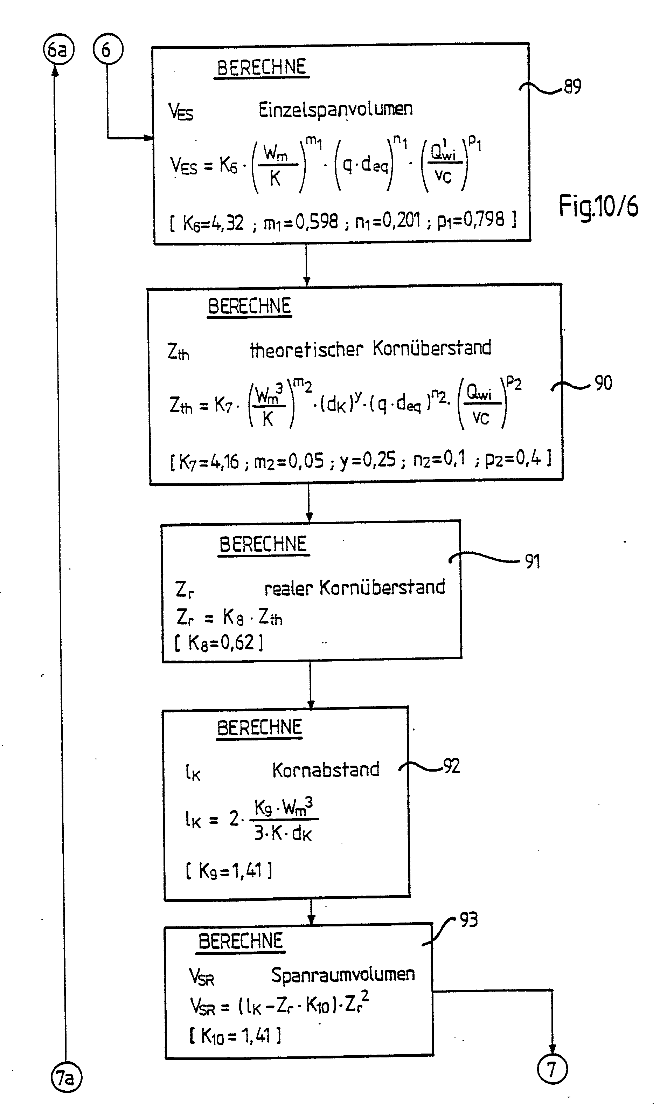

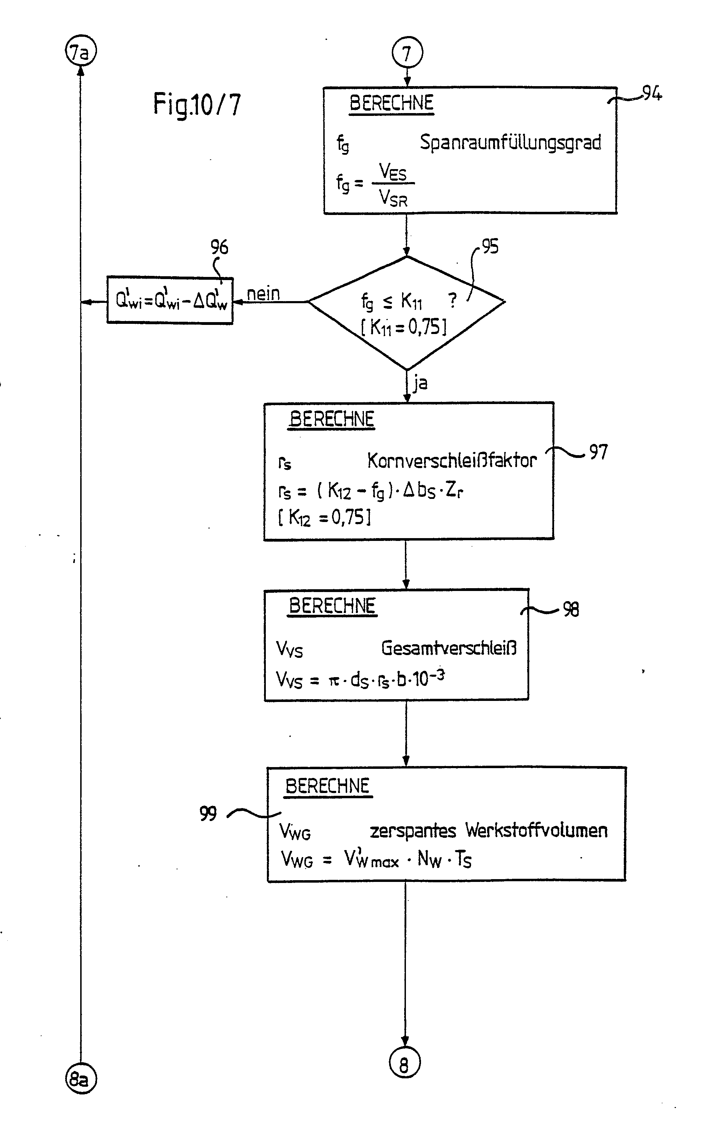

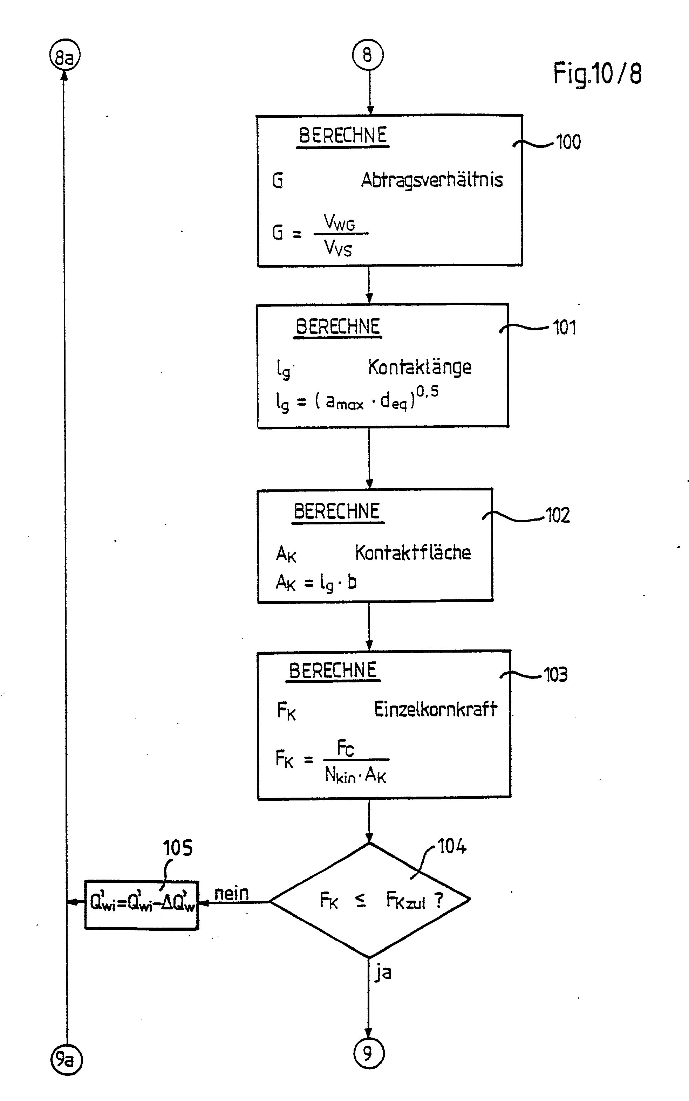

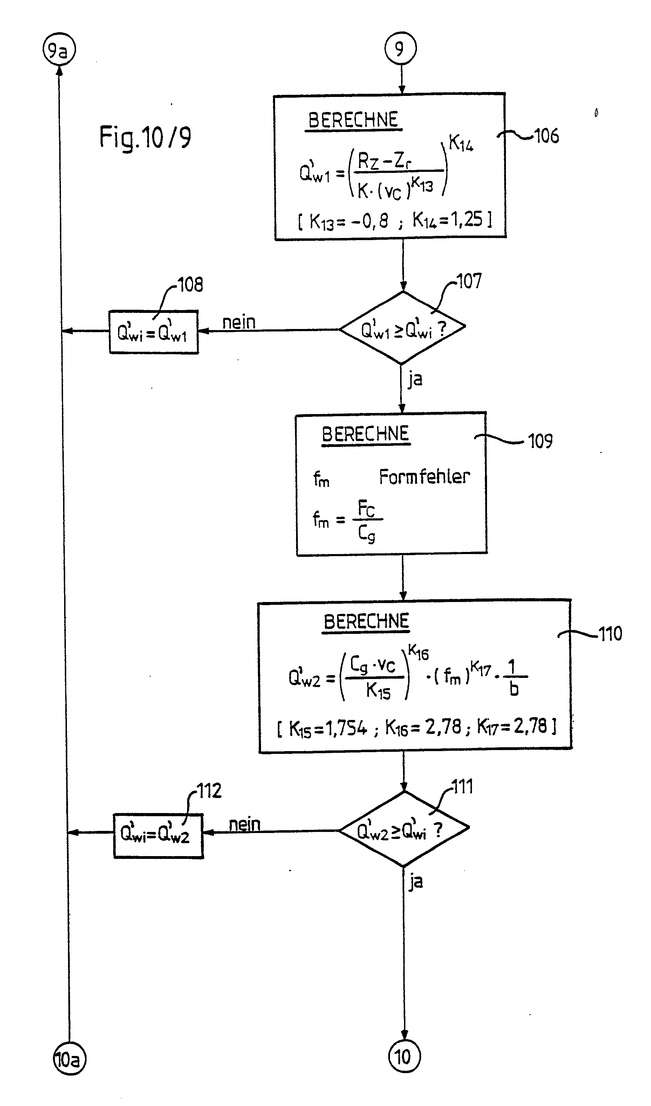

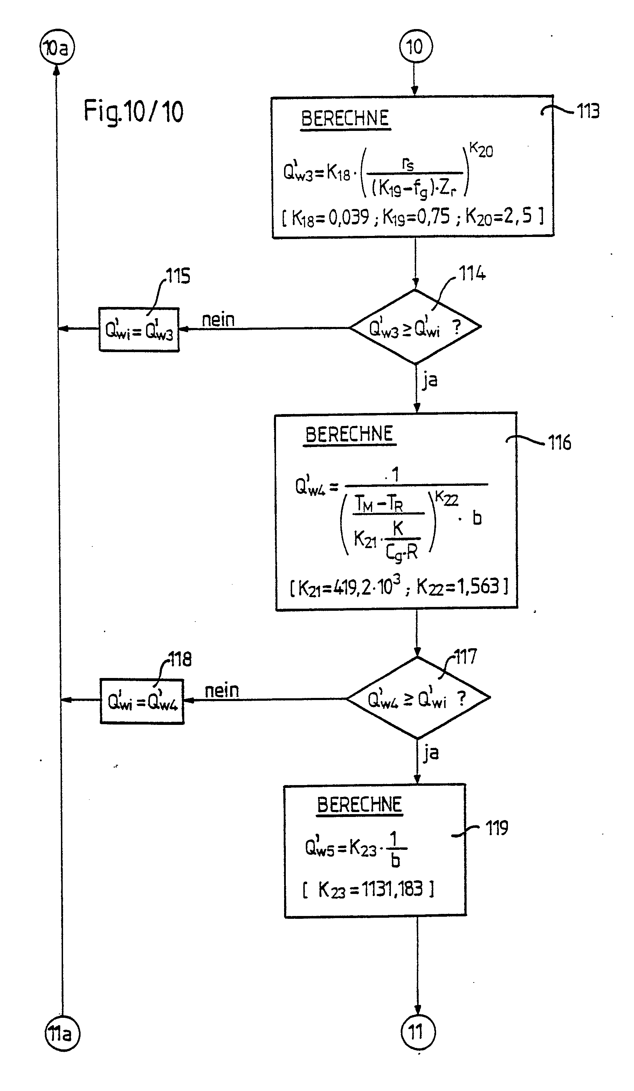

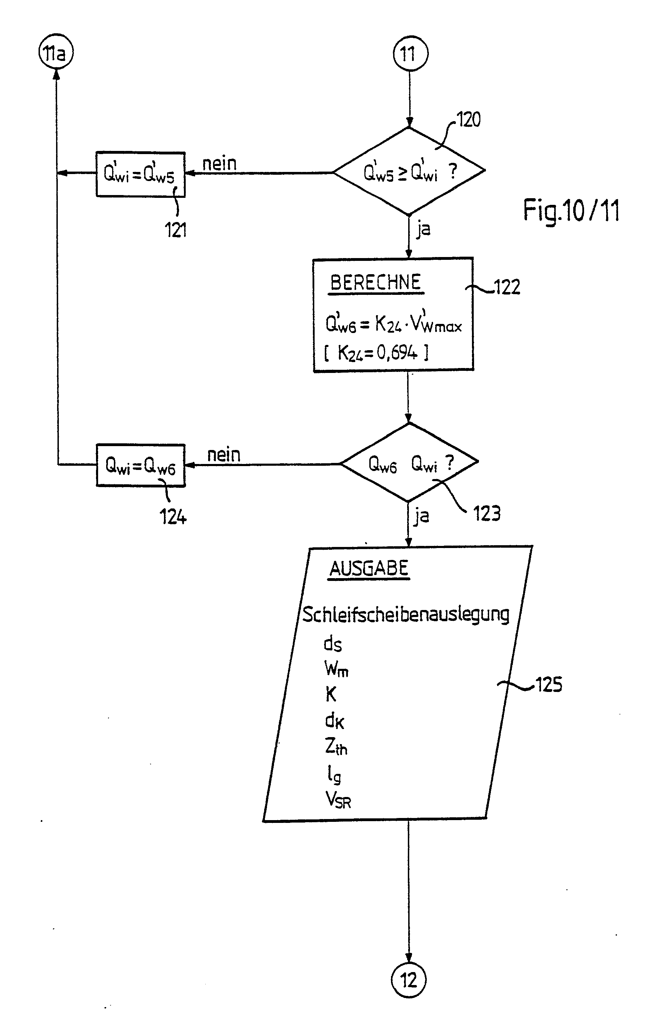

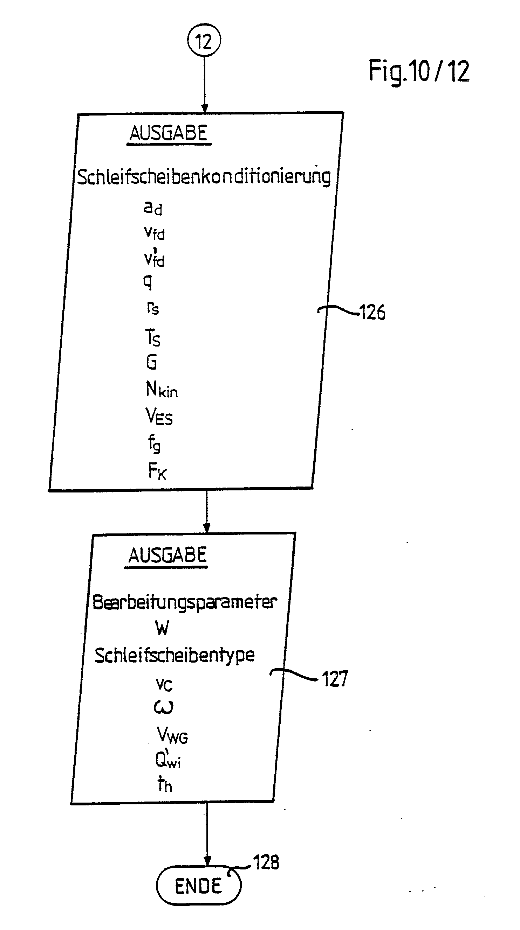

Fig. 10/1 bis 10/12 ein Flußdiagramm zur Erläuterung einer Ausführungsform des erfindungsgemäßen Verfahrens.

Das erfindungsgemäße Verfahren verfolgt das Ziel, die Bearbeitungsaufgabe unter Berücksichtigung des Werkstoffes, der Roh- und Fertigteilgeometrie und der Oberflächenqualität in ein Bearbeitungskonzept umzusetzen, bei dem eine Vorhersage der Werkzeugspezifikation, der Konditionierungsgrößen, der Technologieparameter, des Prozeßverlaufes und der Bearbeitungszeit getroffen werden kann, ohne experimentelle Versuchsabläufe durchzuführen. Die ermittelten Informationen zum Formschleifen der Nockenwelle werden der Steuerung einer Nockenformschleifmaschine in einer Form dargestellt, die eine Editierung des vorgeschlagenen numerischen Steuerprogramms nach DIN 66025 ermöglicht.

Das erfindungsgemäße Verfahren bezieht sich vorzugsweise auf das Gebiet des CBN-Schleifens, bei dem Schleifscheiben mit einem Schleifmittelbesatz aus CBN (Cubisches Bornitrid)-Kristallen verwendet werden. Es wird hierbei eine quantitative Verbindung zwischen den physikalischen Vorgängen des CBN-Nockenformschleifens als geschlossener Wirkungskreis mit den Prozeßparametern der Nockenformschleifmaschine hergestellt.

Hierzu wird zunächst die Bearbeitungsaufgabe definiert. Als Eingangsgröße wird das Werkstück mit Werkstoff, Aufmaß und Geometrie vorgegeben. Als Störgröße werden die Kriterien mit Schwingungen und Temperatur vorgegeben und schließlich werden als Ausgangsgröße die Grenzkriterien, d.h. der Formfehler und die Oberflächengüte definiert.

Aus der Bearbeitungsaufgabe folgt die Technologie und zwar sowohl hinsichtlich der Bearbeitungskinematik wie auch hinsichtlich der Bearbeitungskinetik. Unter ersterem versteht man die Prozeßgrößen der Zustellung, des Zerspanvolumens, der Winkelgeschwindigkeit, der Schnittgeschwindigkeit, der Kontaktlänge und des äquivalenten Schleifscheibendurchmessers als Stellgrößen, während man unter dem zweiten das Zeitspanvolumen, die Schnittkraft, die Leistung, die Prozeßdauer, den Verschleiß und die dynamische Steifigkeit als Prozeßgrößen versteht.

Aus der Bearbeitungsaufgabe und der Technologie wird dann das Werkzeug nach Auslegung und Konditionierung bestimmt. Unter ersterem versteht man die Zustandsgrößen der Spezifikation und der Topographie, während man unter dem zweiten die Kerngrößen, d.h. die Zustellung und die Geschwindigkeitsstrategie des Abrichtens versteht.

Aus der Technologie und dem Werkzeug folgt dann schlußendlich das Bearbeitungskonzept, zu dem als Protokoll die Ergebnisgrößen, nämlich die Schnittwertoptimierung für minimale Schleifzeit und die Steuergrößen für das NC-Programm nach Roh/Fertigteilbeschreibung, Fertigungsdaten, Bearbeitungsablauf, Konditionierungsstrategie und Ausführungsanweisung ausgegeben werden.

Zusammengefaßt bedeutet dies, daß bei dem erfindungsgemäßen Verfahren zunächst die Werkstück-

4

kenndaten (Werkstoff, Aufmaß und Geometrie) als Eingangsgrößen und die Grenzkriterien (Formfehler der Nockenkontur, Oberflächenqualität, thermische Randzonenbeeinflussung) als Ausgangsgrößen vorgegeben werden, um daraus die Bearbeitungsstrategie festzulegen. Als Folge der Zusammenhänge zwischen Bearbeitungskinematik als Stellgrößen mit der numerischen Betrachtung der Auslegung einer Schleifscheibentopographie und Bearbeitungskinetik als Prozeßgrößen wird ein Bearbeitungskonzept definiert, so daß eine minimale Schleifzeit bei optimalen Schnittwerten ermöglicht wird, die als Ergebnisgrößen das NC-Programm als Steuergröße bestimmen. Wesentlicher Bestandteil des vorgeschlagenen Verfahrens ist die Konkretisierung des physikalischen Wirkmechanismus des Bearbeitungsprozesses mit einer analytischen Betrachtung der Schneidenbewegung beim Schleifen sowie das Zusammenwirken der Einzelkomponenten an der Zerspanstelle.

Bevorzugt wird das erfindungsgemäße Verfahren als Graphik-Dialog an der Nockenformschleifmaschine in einer für den Benutzer der Schleifmaschine leicht handhabbaren Weise dargestellt. So kann man in vorteilhafter Weise zunächst eine Werkstoffgruppe vorgeben, weil erfahrungsgemäß die zu schleifenden Nockenwellen nur aus einer endlichen Anzahl von Werkstoffen bestehen. Der Benutzer der Schleifmaschine braucht daher nur mittels einer Kennziffer einen bestimmten standardisierten Werkstoff vorzugeben. Die Geometriekenngrößen der Nockenkontur werden mittels mehrfacher Ableitung nach der Zeit kinetodynamisch analysiert und als Prozeßparameter dargestellt, wie dies an sich bekannt ist.

Auch die Werkzeugwege in der X-Achse und der dazu senkrechten Z-Achse werden graphisch dargestellt und können vom Benutzer der Schleifmaschine je nach Anwendungsfall vorgegeben werden.

Bei der Betrachtung der Bearbeitungskinematik wird angenommen, daß die Schleifscheibe sich mit ihrer peripheren Schneiden relativ zum Werkstück auf einer Orthohypozykloide bewegt, deren Bahn aus der Überlagerung der Umfangsgeschwindigkeit der Schleifscheibe und der Werkstückgeschwindigkeit resultiert. Die aufeinanderfolgenden Othohypozykloiden führen während der Oberflächenerzeugung im Kontaktbereich zu einem Materialabtrag, dessen Größe von der Zustellung, dem Zerspanvolumen, der Kontaktlänge und dem äquivalenten Schleifscheibendurchmesser bestimmt wird.

Die vorgegebene Rauhtiefe der zu bearbeitenden Nockenkontur definiert die Korngröße und damit die Konzentration der CBN-Schleifscheibe.

Zusammengefaßt ausgedrückt wird nun zunächst der theoretische Kornüberstand hergeleitet und danach mittels des Kornabstandes das Spanraumvolumen bestimmt. Hierbei wird davon ausgegangen, daß das CBN-Korn in der Schleifscheibenbindung durch zylindrische Bindungsstege eingebunden ist, die das Korn mit einer Steifigkeit in Abhängigkeit von dem Elastizitätsmodul ($2\text{-}10 \times 10^4$ N/mm$^2$), der Biegefestigkeit (25-150 N/mm$^2$) und der Druckfestigkeit (100-1000 N/mm$^2$) in der Bindung verankert. Wichtig ist hierbei, daß im Rahmen des vorliegenden Verfahrens vorzugsweise keramische Bindungen von CBN-Körnern betrachtet werden.

Bei dem zugrundegelegten Kornverteilungsmodell wird davon ausgegangen, daß die Körner in einer statistischen Schneidenverteilung in quadratischer Anordnung auf konzentrischen Ebenen liegen. Es wird hierdurch die Möglichkeit gegeben, die flächenbezogene kinematische Schneidenzahl, die Korndichte, das Einzelspanvolumen, die Kornbelastung, sowie den Spanraumfüllungsgrad zu berechnen, um anschließend die charakteristischen Kenngrößen der Schleifscheibentopographie mit der Bearbeitungskinetik abzustimmen. Mittels der berechneten Werkzeugdaten wird eine CBN-Schleifscheibe mit ihrer Bezeichnung aus der Werkzeugdatei empfohlen.

Die Konditionierungsparameter werden nach dem theoretischen Kornverschleiß und dem theoretischen Abtragsverhältnis bestimmt.

Insgesamt wird damit eine Optimierungsstrategie verfolgt, mit dem Ziel, eine minimale Schleifzeit unter Beachtung bestimmter Nebenbedingungen zu erzielen und damit die Schnittdaten exakt zu beschreiben.

Im Graphikdialog werden schließlich die ermittelten Werte für den Benutzer der Nockenformschleifmaschine mittels eines Protokolls dargestellt.

Bevor die speziellen Eigenheiten eines Ausführungsbeispiels der erfindungsgemäßen Verfahrens beschrieben werden, soll zunächst kurz das zugrundeliegende physikalische Modell erläutert werden. Ergänzend ist auf die bereits erwähnte Dissertation von Yegenoglu zu verweisen, in der sich weitere Erläuterungen über die physikalischen Prozesse beim CBN-Schleifen finden.

Die Parameter eines mehrstufigen Schleifprozesses, die als Steuergröße die Maschineneinstellung beim Nockenformschleifen im Einstechverfahren bestimmen, sind die Schnittgeschwindigkeit $v_c$, die Werkstückwinkelgeschwindigkeit $\omega_w$ und die Zustellung pro Wertstückumdrehung a.

Die Schnittgeschwindigkeit $v_c$ kann als konstanter Parameter betrachtet werden, der entsprechend der jeweiligen Schleifaufgabe in einem mehrstufigen Prozeß festgelegt wird. Die Schnittgeschwindigkeit entspricht in erster Näherung der Umfangsgeschwindigkeit der Schleifscheibe. Die Schnittgeschwindigkeit $v_c$ läßt sich über den Kosinussatz aus der Beziehung:

$$v_c{}^2 = \sqrt{v_s{}^2 + v_w{}^2 - 2\,v_s\,v_w\,\cos\alpha}\,(m/s) \qquad [1]$$

Wo

$$v_w = 2\,\pi\,r_i \cdot n / 60.000 \ (m/s) \qquad [2]$$

mit

$$n = \omega_w / 360 \ (min^{-1}) \qquad [3]$$

ist. Praxisüblich sind Werte von $v_c$ = 60-140 m/s. Verglichen mit der Schnittgeschwindigkeit ist die Werkstückumfangsgeschwindigkeit $v_w$ um mindestens zwei Zehnerpotenzen kleiner und das Geschwindigkeitsverhältnis ist durch die Gleichung

$$q = v_c/v_w \qquad [4]$$

gegeben. Die Länge des Eingriffbogens ergibt sich aus den Krümmungen von Schleifscheibe und Werkstück sowie aus dem Radialvorschub. Der Radialvorschub entspricht dem Zustellbetrag der Schleifscheibe pro Werkstückumdrehung. Die geometrische Länge $l_g$, über den jede Schneide mit dem Werkstück in Eingriff steht, berechnet sich zu

$$l_g = \sqrt{a\,d_{eq}}\,(mm) \qquad [5]$$

mit

$$d_{eq} = \frac{d_s\,d_w}{d_s + d_w} \qquad (mm) \qquad [6]$$

Kontaktlängen beim Nockenformschleifen liegen üblicherweise zwischen $l_g$ = 0,1-5 mm. Größere Werte ergeben sich insbesondere an der Nockenflanke.

Das Zerspanvolumen ist durch die Nockengeometrie und die Zustellung pro Werkstückumdrehung gegeben:

$$V_w = a \cdot b \cdot \left( \varphi_G \cdot R_G + 2 \cdot \varphi_F \cdot \sum_{K=1}^{n} R_K \cdot K^{-1} + \varphi_s \cdot R_s \right) \cdot \frac{\pi}{180} \qquad (mm^3) \qquad [7]$$

Wo b die Nockenbreite, $\phi_G$ den Grundkreiswinkel, $R_G$ den Grundkreisradius, $R_G$ den Grundkreisradius, $\phi_F$ den Flankenwinkel, $R_K$ den Flankenradius für ein Intervall, $\phi_S$ den Spitzenwinkel und $R_S$ den Spitzenradius bezeichnet. Die Schleifzeit pro Nockenumdrehung läßt sich mit der Gleichung

$$t_h = (\phi_G \cdot 60)/\omega_G + 2(\phi_F \cdot 60)/\omega_F + (\phi_s \cdot 60)/\omega_S \qquad [8]$$

berechnen.

Für die Bearbeitungskinetik gilt folgendes:

Bei angegebenem Schleifaufmaß kommt es beim Schruppen darauf an, in kürzester Zeit so viel Werkstoff wie möglich abzutragen, ohne thermische Randzonenschäden zu befürchten.

Das Zeitspanvolumen kann aus dem Zerspanvolumen und der Schleifzeit pro Nockenumdrehung berechnet werden:

$$Q_{w1} = \frac{V_{w1}}{t_{h1}} \qquad (mm^3/s) \qquad [9]$$

Bezogen auf eine Schleifscheibenbreite von 1 mm gilt:

$$Q_{w1}' = \frac{Q_{w1}}{b} \qquad (mm^3/s\ mm) \qquad [10]$$

Übliche bezogene Zeitspanvolumina liegen im Bereich von $Q_w'$ = 0,1-5 mm³/mms beim Schlichten. Dabei sind Oberflächenrauhtiefen $R_Z$ = 0,5 μm bis 4 μm erreichbar. Beim Schruppen können extrem hohe Zeitspanvolumina $Q_w'$ = 85 - 110 mm³/mms ermöglicht werden. Diese Werte hängen von dem Werkstoff, der Korngröße, der Konzentration und der Schneidenbelastung ab.

Aus dem Zeitspanvolumen $Q_w'$ läßt sich die Schnittleistung berechnen. Es ergibt sich die Gleichung:

$$P_c = K \cdot Q_w{}^n \qquad [11]$$

Hierin bedeutet k eine Konstante und n einen exponentiellen Beiwert, der das jeweilige Werkstück bezogener Verhältnis zwischen Spanbildungs- und Reibungsenergie berücksichtigt.

Eine Gegenüberstellung der Konstante k und des Exponenten n für die gleiche Werkstoffklasse, nämlich Schalenhartguß, perlitischen Ferroguß und Temperguß, zeigt, daß die Art der Konditionierung des Schleifwerkzeuges eine Unterscheidung in ihren Größen darstellt:

- So gilt bei einer Gleichlaufkonditionierung ohen Schärfen k = 1,903 und n = 0,384, bei einer Gleichlaufkonditionierung mit Schärfen k = 1,824 und n = 0,384, während bei einer Gegenlaufkonditionierung ohne Schärfen k = 1,869 und n = 0,36 sowie bei einer Gegenlaufkonditionierung mit Schärfen k = 1,754 und n = 0,36 ist.

Die Ursache für diese Erscheinung ist in der Spanraumbildung sowie in der Erzeugung der Schneidengeometrie zu suchen.

Die spezifische Schnittenergie

$$e_c = \left( \frac{P_c}{Q_w} \right) \cdot 10^3 \qquad\qquad (J/mm^3) \qquad [12]$$

läßt sich in ähnlicher Weise in Abhängigkeit vom Zeitspanvolumen darstellen.

Die Schnittkraft bei einem konstanten Zeitspanvolumen ist durch die Gleichung

$$F_c = \left( \frac{P_c}{v_c} \right) \cdot 10^3 \qquad\qquad (N) \qquad [13]$$

gegeben. Bei konstanter Schnittleistung und steigender Schnittgeschwindigkeit sinkt die Schnittkraft degressiv. Dieser Zusammenhang ist letztlich auf die Verringerung des Spanquerschnittes zurückzuführen.

Die Schnittkraft wird als Summe der Einzelkräfte bestimmt, die momentan an den im Schnitt befindlichen Schneiden wirken. Die einzelnen Kraftkomponenten eines Kollektivs von Schneiden einer Schleifscheibe beim Außeneinstechschleifen sind die Schnitt-Tangentialkraft $F_{ct}$ und die Schnitt-Normalkraft $F_{cn}$.

Die Schnittkraft $F_c$ kann dann beschrieben werden durch den Zusammenhang

$$F_c = \sqrt{F_{ct}^2 + F_{cn}^2} \, (N) \qquad [14]$$

Die Schnitt-Normalkraft $F_{cn}$ kann man über die Beziehung

$$F_{cn} = \frac{F_{ct}}{\mu} \qquad\qquad (N) \qquad [15]$$

ermitteln, wobei der Proportionalitätsfaktor $\mu$ das Schnittkraftverhältnis darstellt

$$\mu = \frac{F_{ct}}{F_{cn}} \qquad\qquad [16]$$

Da $\mu$m von den Spanbildungsmechanismen an den Kornschneiden bestimmt wird, entspricht das Schnittkraftverhältnis hauptsächlich der Schneidenform der kinematischen Schneidenzahl, dem Spanungsquerschnitt, dem Kornwerkstoff, dem Werkstückwerkstoff sowie den Kühlmittelbedingungen.

Bei CBN-Scheiben geht man von einem Schnittverhältnis von $\mu$ = 0,36 bis 0,45 aus und es gibt sich ein Belastungwinkel der Schneide $\alpha_b$ = arctan $\mu$ = 19,8° bis 24,2°.

Je größer das Verhältnis von Tangentialkraft zur Normalkraft ist, desto geringer sind die in der Kontaktzone ablaufenden Reib-, Scher- und Trennvorgänge, was auf einen scharfen Schneidenzustand mit abgestimmten Spanräumen hinweist. Bei sorgfältiger Abstimmung der Schleifscheibenspezifikation und der Konditionierung auf den Schleifprozeß ist es möglich, die Topographie des Schleifwerkzeuges so zu erzeugen, daß nur sehr geringe Abweichungen des Anfangsschnittkraftverhältnisses vor dem im stationären Bereich auftreten.

Hinsichtlich des Werkzeuges gilt folgendes:

Um die Spezifikation auszulegen ist zunächst die Rauhheit zu berücksichtigen, die für die jeweilige

# EP 0 342 528 A2

Schleifaufgabe im allgemeinen vorgeschrieben ist. Die Rauhheit ist jedoch einmal von der Spezifikation des CBN-Schleifwerkzeuges und zum anderen von den Eingriffsbedingungen abhängig. Entsprechend dem Verfahren wird die Spezifikation des CBN-Schleifwerkzeuges nach Korngröße und Konzentration gewählt, damit unter den noch zu erläuternden kinematischen und kinetischen Bedingungen die gestellte Rauhheitsforderung eingehalten werden kann. Die Spezifikation des Schleifwerkzeuges bestimmt die Ausgangswirkrauhtiefe, bei kleinen Korngrößen und steigender Konzentration sinkt die Ausgangswirkrauhtiefe. Ein großes Korn und sinkende Konzentration erhöht die Ausgangswirkrauhtiefe.

Für heutzutage verfügbare CBN-Schleifscheiben läßt sich etwa die folgende Tabelle von korrespondierenden Parametern angeben:

| Korngröße | Konzentration | Ausgangswirkrauhtiefe |
|---|---|---|
| B 64/B 91 | K (%) = 30 bis 42 | $R_{tse}$ = 3,2 - 5,5 $\mu$m |
| B 126 | K (%) = 30 | $R_{tse}$ = 5,2 - 6,8 $\mu$m |
| B 181/B 252 | K (%) = 30 bis 18 | $R_{tse}$ = 8,8 - 12,4 $\mu$m |

Die Korngröße und die Konzentration einer CBN-Schleifscheibe ergibt die Oberflächenbeschaffenheit des Schleifwerkzeuges, so daß zwischen den peripheren CBN-Körnern für die anfallenden Späne ausreichender Raum vorhanden ist.

Die Art und die Härte der Bindung übt einen Einfluß auf die Schleifscheibentopographie sowie auf das Ausbrechen der CBN-Körner aus der Bildung (Keramik) aus. Bei einer härteren Bindung bleiben die CBN-Kristalle länger in der Bindung, so daß in erster Linie ein Abstumpfen der Schneiden im Schleifprozeß stattfindet. Hierdurch ändert sich nicht nur die Kornform, sondern auch die Schneidenanzahl.

Die Bindungsart einer Schleifscheibenspezifikation ist abhängig von der Korndichte $C_K$, die als Korngröße zur Beschreibung der Kornzahl pro mm$^3$ Schleifbelagvolumen gewählt wird. Die Gleichung

$$C_k = \frac{K}{1/3 \cdot q_m \cdot W_m^3} \qquad (mm^{-3}) \qquad [17]$$

mit dem Wert $q_m$ = 1,41 für einen Oktaeder stellt die Abhängigkeit vom mittleren Korndurchmesser und der Konzentration dar. $W_m^3$ ist dabei das theoretische Volumen eines Oktaeders.

Um die Schleifscheibentopographie zu betrachten, sind die flächenbezogene kinematische Schneidenzahl, das Zerspanvolumen pro Schneide, das Spanraumvolumen sowie der Spanraumfüllungsgrad zu berücksichtigen. Hierdurch wird die Möglichkeit geschaffen, durch analytische Größen eine theoretische Abstimmung zwischen den Volumina des Zerspanungsprozesses einerseits mittels der Technologieparameter und des Werkzeuges andererseits über die Topographie bei einer definierten Spezifikation durchzuführen. Gleichzeitig wird der Werkstückverschleiß untersucht, der nicht nur durch veränderte Korngeometrie, sondern auch durch das Ausbrechen der Körner bei hoher Kornbelastung und nicht abgestimmter Festigkeit des Bindesmaterials entsteht.

Für die flächenbezogene kinematische Schneidenzahl läßt sich der folgende Zusammenhang beschreiben:

$$N_{kin} = 0,928 \cdot \left(\frac{K}{W_m^3}\right)^{0,598} \cdot \left(\frac{Q_w}{q \, d_{eq} \cdot v_c}\right)^{0,201} \cdot 10^6 \qquad [18]$$

wobei K die volumenbezogene Konzentration, $W_m$ die mittlere Maschenweite für die Körner, d.h. bei einem Oktaeder das 1,42-fache des Korndurchmessers $d_k$ und schließlich q das Geschwindigkeitsverhältnis ist, wie bereits weiter oben dargestellt. Die flächenbezogene kinematische Schneidenzahl hat die Dimension mm$^{-2}$.

Das Einzelspanvolumen läßt sich in Abhängigkeit von den Schnittbedingungen und der Schleifscheibenspezifikation durch die Gleichung

8

$$V_{ES} = 4,32 \cdot \left(\frac{W_m{}^3}{K}\right)^{m_1} \cdot \left(q \cdot d_{eq}\right)^{n_1} \cdot \left(Q_w{}'/v_c\right)^{p_1} \quad (\mu m^3) \qquad [19]$$

bestimmen. Das Einzelspanvolumen erhält dabei die Dimension $\mu m^3$, wenn man die Exponenten mit $m_1 = 0,598$, $n_1 = 0,201$ und $p_1 = 0,798$ wählt und $W_m$ in $\mu m$, $Q_w$ in $mm^3/mms$, $d_{eq}$ in $mm$ und $v_c$ in $m/s$ einsetzt.

Für die Ermittlung des Spanraumvolumens soll zunächst der theoretische mittlere Kornüberstand sowie der Kornabstand bestimmt werden. Der theoretisch durchschnittliche Kornüberstand zwischen den peripheren Kornspitzen und dem Bindungsmaterial wird durch die Gleichung

$$Z_{th} = 4,16 \cdot \left(\frac{W_m{}^3}{K}\right)^{m_2} \cdot \left(d_k\right)^{y} \cdot \left(q \cdot d_{eq}\right)^{n_2} \cdot \left(\frac{Q_w{}'}{v_c}\right)^{p_2} \quad (\mu m) \qquad [20]$$

gegeben, wobei die Exponenten mit $m_2 = 0,05$, $y = 0,25$, $n_2 = 0,1$ und $p_2 = 0,4$ angegeben werden können.

Der mittlere Kornüberstand wird dann durch die vereinfachte Beziehung

$Z_r = 0,62 \cdot Z_{th} \, (\mu)$ [21]

bestimmt.

Der Kornabstand läßt sich dann durch die Gleichung

$$l_k = \frac{2 \cdot (1,41 \cdot W_m{}^3)}{3 \cdot K \cdot d_k} \qquad (\mu m) \qquad [22]$$

berechnen.

Das Spanraumvolumen ergibt sich dann aus der folgenden Beziehung

$V_{SR} = (l_k - Z_r \cdot 1,41) \cdot Z_r{}^2 \, (\mu m)$ [23]

Das Verhältnis zwischen dem Einzelspanvolumen und dem zugehörigen Spanraumvolumen wird als sogenannter Spanraumfüllungsgrad definiert

$$f_g = \frac{V_{ES}}{V_{SR}} \qquad [24]$$

Der Spanraumfüllungsgrad hängt maßgeblich von dem zu bearbeitenden Werkstoff ab, wenn man davon ausgeht, daß die Spezifikation sowie die Topographie den Anforderungen der Schnittbedingungen angepaßt wird. Je nach Werkstoff und Werkstoffzustand besitzen die Späne unterschiedliche Formen. Im realen Schleifprozeß beanspruchen die Späne ein größeres Spanraumvolumen als ihr eigenes Volumen. Hieraus läßt sich ableiten, daß der Spanraumfüllungsgrad einen bestimmten Grenzwert, beispielsweise 0,75 nicht überschreiten darf, wenn eine Überlastung des Schleifbelages vermieden werden soll.

In dieser Hinsicht ist ein radialer Kornverschleiß zugelassen, der mittels der Gleichung

$r_s = (0,75 - f_g) \cdot \Delta b_s \cdot Z_r \, (\mu m)$ [25]

errechnet wird, wobei $\Delta b_s = 1,42$ dem Kornüberdeckungsfaktor entspricht.

Die Standfestigkeit des Schleifwerkzeuges ist beim Einstechschleifen von großer Bedeutung. Übersteigt der Radialverschleiß ein bestimmtes zulässiges Maß, kann die geforderte Form nur durch Konditionierung (Abrichten) wieder erzeugt werden. Das Konditionierungsintervall dient oft zur Beurteilung des Schleifprozesses. Es wird als das Verhältnis von abgetragenem Werkstoffvolumen zum radialen Schleifscheibenverschleiß durch das sogenannte Schleifverhältnis (grinding ratio) angegeben bzw. als Abtragsverhältnis G bezeichnet. Der zur Errechnung des Abtragsverhältnisses notwendige Gesamtverschleiß der Schleifscheibe gehorcht der Beziehung:

$V_{vs} = \pi \cdot d_s \cdot r_s \cdot b \cdot 10^{-3} \, (cm^3)$ [26]

Das zerspante Werkstoffvolumen innerhalb eines Konditionierungsintervalls läßt sich mit der Gleichung

$V_{WG} = V_w \cdot N_w \cdot T_s \, (cm^3)$ [27]

berechnen, wobei $V_w$ das Zerspanvolumen pro Werkstück, $N_w$ die Anzahl der bearbeiteten Werkstücke pro

9

Stunde und $T_s$ das Standintervall zwischen zwei Konditionierungen angibt.

Damit wird das Abtragsverhältnis zu

$$G = \frac{V_{WG}}{V_{vs}} \qquad\qquad [28]$$

Infolge der Kornabstumpfung kommt es durch verstärkte Reibung zu einer Erhöhung der Einzelkornkraft $F_K$. Zum anderen wird die Bindung an der Kornbasis bei höheren Schnittleistungen stärker erodiert, was wiederum die Abnahme der Kornausbruchkraft $F_{Kmax}$ zur Folge hat.

Die Belastung des einzelnen Kornes wird durch die Zahl der Schneiden bestimmt, auf die sich die Schnittkraft infolge der Schleifscheibenspezifikation und der Prozeßparameter verteilt.

Die Einzelkornkraft berechnet sich aus

$$F_k = \frac{F_c}{N_{kin} \cdot A_K} \qquad (N) \qquad [29]$$

wobei
$$A_K = l_g \cdot b \ (mm^2) \qquad [30]$$
die Kontaktfläche ist.

Der effektive Schneidenabstand $l_K$ und die Eingriffslänge sind neben anderen Einflußgrößen auch von der Zustellung und der Schnittgeschwindigkeit abhängig. Die Auswirkung der Änderung der kinematischen Größen $v_s$ und $V_w$ auf die Spandicke $a_n$ wird durch die Beziehung

$$a_n = a \cdot \frac{V_w}{V_s} \cdot \frac{l_k}{l_g} \qquad (mm) \qquad [31]$$

dargestellt.

Erhöht man die Schleifscheibenumfangsgeschwindigkeit mit gleichbleibenden Eingriffsgrößen, ergeben sich abnehmende Spandicken. Dadurch, daß weniger Schneiden im Eingriff stehen, sinkt dabei jedoch die gesamte Schnittkraft. Durch Verkürzung der Kontaktzeit zwischen Schleifkorn und Werkstück bei einer hohen thermischen Leitfähigkeit des Kornes können die Kontaktzonentemperaturen gesenkt werden. So beträgt die thermische Leitfähigkeit von CBN-Korn beispielsweise 700 W/m·°C und liegt wesentlich höher als die von herkömmlichen Aluminiumoxid.

Als weiterer Prozeßparameter ist die Konditionierung der Schleifscheibe zu beachten.

Schleifscheiben verlieren bekanntlich infolge Verschleiß sowohl ihr ursprüngliches Ausgangsprofil wie auch ihre Schneidfähigkeit. Es entsteht eine Veränderung der Schleifscheibentopographie als Funktion der Schleifzeit. Die Aufgabe der Konditionierung ist es, die Topographie des Schleifbelages wieder in die Ursprungsform zu bringen. Als Konditionierungswerkzeuge kommen Diamant-Formrollen oder Schärfstäbe zum Einsatz.

Die Konditionierungsparameter bezüglich des rotierenden Diamant-Werkzeuges sind die Formgrößen: Profilform, Spezifikation (Korndichte, Setzungsschema) sowie die Einstellgrößen: Zustellung pro Konditionierungsvorgang, Umfangsgeschwindigkeit der Rolle, axialer Seitenvorschub und Geschwindigkeitsquotient.

Definiert man den Überdeckungsgrad mit
$$V_d = a_{pd} / f_{ad} \qquad [32]$$
als Quotient aus Wirkbreite des Rollenprofils und Seitenvorschub der Rolle pro Schleifscheibenumdrehung, so liegen diese Werte für $V_d$ zwischen 1 und 6, so daß die theoretische axiale Welligkeit

$$W_{at} = \frac{f_{ad}^2}{8r_p} \qquad\qquad [33]$$

minimal ist.

Der Geschwindigkeitsquotient

$$q_d = \frac{v_R}{v_S} \qquad [34]$$

ergibt sich aus der Umfangsgeschwindigkeit der Diamantrolle $v_R$ und der Schleifscheibe $v_S$. Wechselnde Drehrichtungen der Rolle (Gleich- und Gegenlauf), der Geschwindigkeitsquotient und der axiale Seitenvorschub beeinflussen die Ausgangswirkrauhtiefe.

Nachdem somit die zugrundeliegenden physikalischen Prozesse in zusammengefaßter Darstellung erläutert wurden, soll nun ein Ausführungsbeispiel der Erfindung im einzelnen erläutert werden, bei dem auf der Grundlage der vorstehend beschriebenen Prozesse eine Schnittwertoptimierung durchgeführt wird. Diese Schnittwertoptimierung hat als Ziel die theoretisch abgeleiteten Zusammenhänge zwischen der Bearbeitungstechnologie, dem Werkzeug und dem Arbeitsergebnis durch ermittelte Abhängigkeiten gegenüberzustellen und zwar unter Berücksichtigung der Leistungsgrenze der Werkzeugmaschine und des Schleifwerkzeuges. Es sollen daraus für beliebige Zustellungs-Werkstückgeschwindigkeitskombinationen optimale Zeitspanvolumina berechnet werden, um eine minimale Schleifzeit zu ermöglichen.

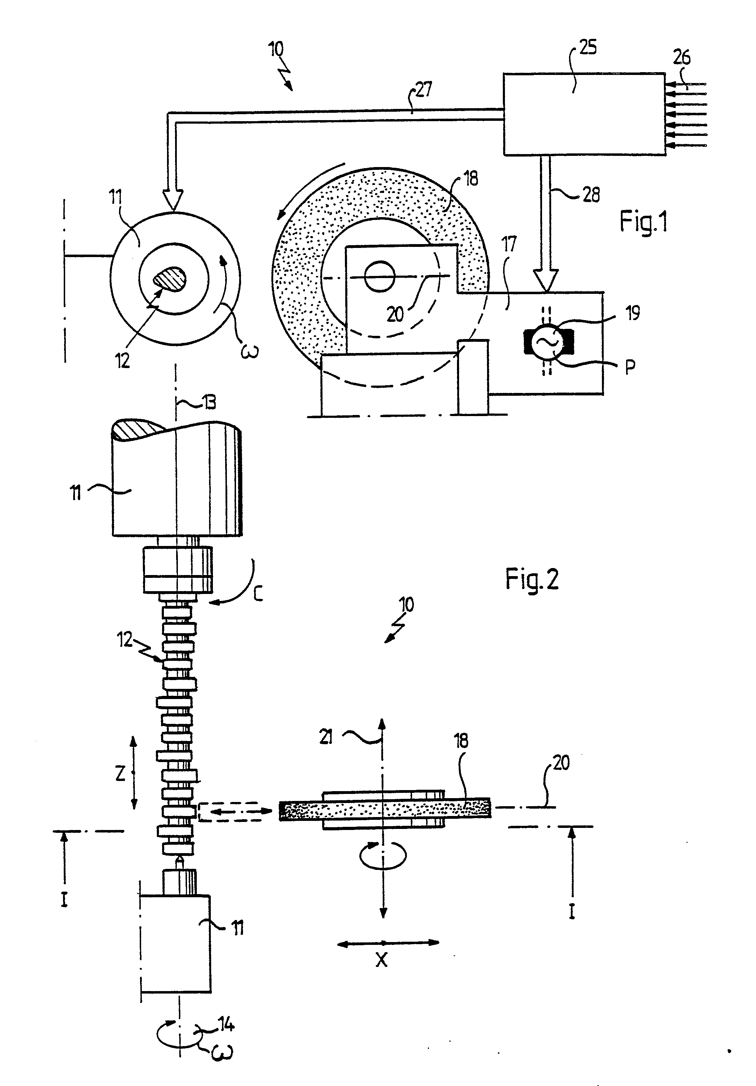

In den Fig. 1 und 2 ist in äußerst schematisierter Weise eine numerisch gesteuerte Nockenformschleifmaschine dargestellt, die ingesamt mit dem Bezugszeichen 10 gekennzeichnet ist.

In einer Werkstückaufnahme 11 ist eine Nockenwelle 12 eingespannt. Die Nockenwelle 12 ist mittels der rotierenden Werkstückaufnahme 11 um ihre Längsachse 13, die sogenannte C-Achse in definierten Winkelschritten verdrehbar, wie mit einem Pfeil 14 angedeutet. Die Winkelgeschwindigkeit der Werkstückaufnahme 11 ist dabei mit $\omega$ gekennzeichnet. Infolge der real vorhandenen Antriebe ist bei der erforderlichen Präzision der Drehwinkeleinstellung der C-Achse 13 nur eine bestimmte maximale Winkelgeschwindigkeit $\omega_{max}$ möglich, die bereichsweise über die Nockenkontur variieren kann, wie nachstehend noch gezeigt werden wird.

Ein Schleifschlitten 17 trägt eine Schleifscheibe 18, die mittels eines Antriebsmotors 19 antreibbar ist. Die Leistung des Antriebsmotors 19 sei mit P bezeichnet.

Der Schleifschlitten 17 mit Schleifscheibe 18 ist entlang einer Achse 20, der sogenannten X-Achse senkrecht zur C-Achse 13 der Nockenwelle 12 in definierten X-Schritten zustellbar.

Wie Fig. 2 in gestrichelter Darstellung zeigt, kann auf diese Weise die Schleifscheibe 18 zur Bearbeitung der Oberfläche von Nocken der Nockenwelle 12 an diese herangefahren werden.

Die Schleifscheibe 18 dreht sich dabei um ihre Achse 21, die mit der sogenannten Z-Achse zusammenfällt. Der Schleifschlitten 17 oder die Werkstückaufnahme 11 sind nämlich zusätzlich in Richtung der Z-Achse 21 verschiebbar, damit die Schleifscheibe 18 nacheinander die einzelnen Nocken der Nockenwelle 12 bearbeiten kann.

Es versteht sich, daß die vorstehende Darstellung nur beispielhaft zu verstehen ist und die Erfindung dadurch nicht eingeschränkt wird. So ist die Erfindung selbstverständlich auch bei solchen Schleifmaschinen einsetzbar, bei denen die Achse der Schleifscheibe zur Werkstückachse geneigt verläuft und die Schleifscheibe statt einer zylindrischen eine konische Schleiffläche aufweist und dgl. mehr.

Bei der Nockenformschleifmaschine 10 gemäß den Fig. 1 und 2 ist ein NC-Steuergerät 25 vorgesehen, dem Eingangsparameter 26 zugeführt werden können. Das NC-Steuergerät 25 leitet daraus Steuersignale ab, die über Datenleitungen 27 und 28 dem Antrieb der Werkstückaufnahme 11 sowie dem Antrieb des Schleifschlittens 17 zugeführt werden. Man unterscheidet hierbei zwischen dem sogenannten "Zustellbetrieb" und dem sogenannten "Bahnbetrieb". Beim Zustellbetrieb wird die Schleifscheibe 18 entlang der X-Achse 20 auf die Nockenwelle 12 zugestellt, um einen bestimmten Werkstoffabtrag beim Schleifen zu erzielen. Im Bahnbetrieb wird hingegen die Schleifscheibe 18 entlang der X-Achse 20 in Abhängigkeit von der jeweiligen Drehstellung der Nockenwelle 12 um die C-Achse 13 so verstellt, daß der Eingriffspunkt bzw. die Eingriffslinie an der Schleifoberfläche der Schleifscheibe 18 stets an einem gewünschten Punkt der Nockenkontur der Nockenwelle 12 anliegt. Dadurch Überlagerung von Zustellbetrieb und Bahnbetrieb können die Nocken der Nockenwelle 12 entlang einer spiraligen Schleifbahn geschliffen werden, die an der Rohoberfläche des unbearbeiteten Nockens beginnt und auf der Kontur der fertig geschliffenen Oberfläche des Nockens endet. Diese Vorgänge sind an sich bekannt und sollen daher hier nicht nochmals näher erläutert werden.

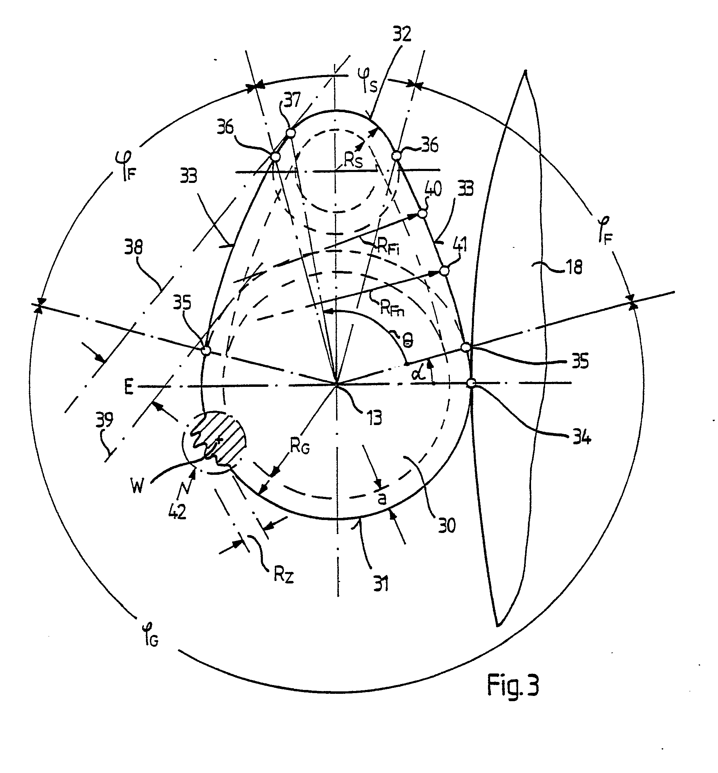

Fig. 3 zeigt einen Nocken 30 der Nockenwelle 12 mit weiteren Einzelheiten.

Der Nocken 30 weist einen sogenannten Grundkreis 31, eine Spitze 32 sowie seitliche Flanken 33 auf.

In einem ersten Punkt 34 greift die Schleifscheibe 18 mit einer Mantellinie an der Oberfläche des Nockens 30 an. In zweiten Punkten 35 geht der Grundkreis 31 in die Flanken 33 über. Die zweiten Punkte 35 definieren damit den sogenannten Grundkreiswinkel $\phi_G$. Der Radius des Grundkreises ist mit $R_G$

11

bezeichnet.

Dritte Punkte 36 kennzeichnen den Übergang von den Flanken 33 zur Spitze 32. Sie definieren damit den sogenannten Flankenwinkel $\phi_F$ und den Spitzenwinkel $\phi_S$. Der Radius der Spitze ist mit $R_S$ bezeichnet.

Ein vierter Punkt 37 bezeichnet einen beliebigen Punkt, beispielsweise auf der Spitze 32, an den eine Tangente 38 an die Nockenkontur gelegt ist. Zieht man zur Tangente 38 eine parallele Tangente an den Grundkreis 31, so gibt der Abstand der parallelen Tangenten 38, 39 den sogenannten Erhebungswert E.

Mit einem fünften Punkt 40 und einem sechsten Punkt 41 sind beliebige Punkte auf der Kontur des Nockens 30, dargestellt am Beispiel zweier Punkte auf der Flanke 33 bezeichnet. Die Krümmungsradien der Punkte 40, 41 sind mit $R_{Fi}$ und mit $R_{Fn}$ bezeichnet. Hiermit soll ausgesagt werden, daß der Krümmungsradius mit $R_{Fi}$ bzw. $R_{Fn}$ im Bereich der Flanken 33, d.h. über die Flankenwinkel $\phi_F$ variiert, während der Krümmungsradius mit $R_G$ im Bereich des Grundkreises 31 über den Grundkreiswinkel $\phi_G$ ebenso konstant ist wie mit $R_S$ über die Spitze 32 bzw. den Spitzenwinkel $\phi_S$.

Um die Nockenkontur analytisch zu definieren, können verschiedene Formen von Tabellen aufgestellt werden. So läßt sich die Kontur des Nockens 30 beispielsweise als Tabelle von Polarkoordinaten darstellen, es sind jedoch auch Darstellungsformen gebräuchlich, bei denen eine sogenannte Erhebungswerttabelle angegeben wird, die den Erhebungswert E über einen Winkel Θ darstellt.

In beiden Fällen wird zur Bestimmung des Bahnbetriebes die jeweils angegebene Tabelle unter Berücksichtigung des Schleifscheibendurchmessers in Steuerbefehle für den Drehwinkel der C-Achse 13 und die Antriebseinheit für die X-Achse 20 des Schleifschlittens 17 umgesetzt.

In Fig. 3 ist mit a noch das Aufmaß bezeichnet, um das die in Fig. 3 durchgezogen eingezeichnete Rohkontur abgetragen werden soll, um die gestrichelt eingezeichnete Fertigkontur zu erhalten.

Schließlich zeigt Fig. 3 in einem Ausschnitt 42 mit stark vergrößerter Darstellung noch die Rauhtiefe $R_Z$, die an der Oberfläche des Nockens 30 durch Schleifen erzeugt werden soll. Außerdem ist im Ausschnitt 42 mit W der jeweils verwendete Werkstoff symbolisiert.

Der mit W symbolisierte Werkstoff ist keine kontinuierlich variable Größe. Für die praktischen Einsatzfälle des erfindungsgemäßen Verfahrens läßt sich vielmehr eine begrenzte Anzahl von Werkstoffen angeben, wie sie üblicherweise als Nockenwellenwerkstoffe eingesetzt werden. Hierzu zählen vor allem der Schalenhartguß, der Temperguß, der perlitische Guß und es ist ferner zu berücksichtigen, ob diese Werkstoffe einsatzgehärtet oder induktiv gehärtet sind. Diese endliche Zahl von Möglichkeiten läßt sich in der Praxis durch eine endliche Anzahl von Kennziffern symbolisieren, die vom Benutzer des erfindungsgemäßen Verfahrens ausgewählt werden können.

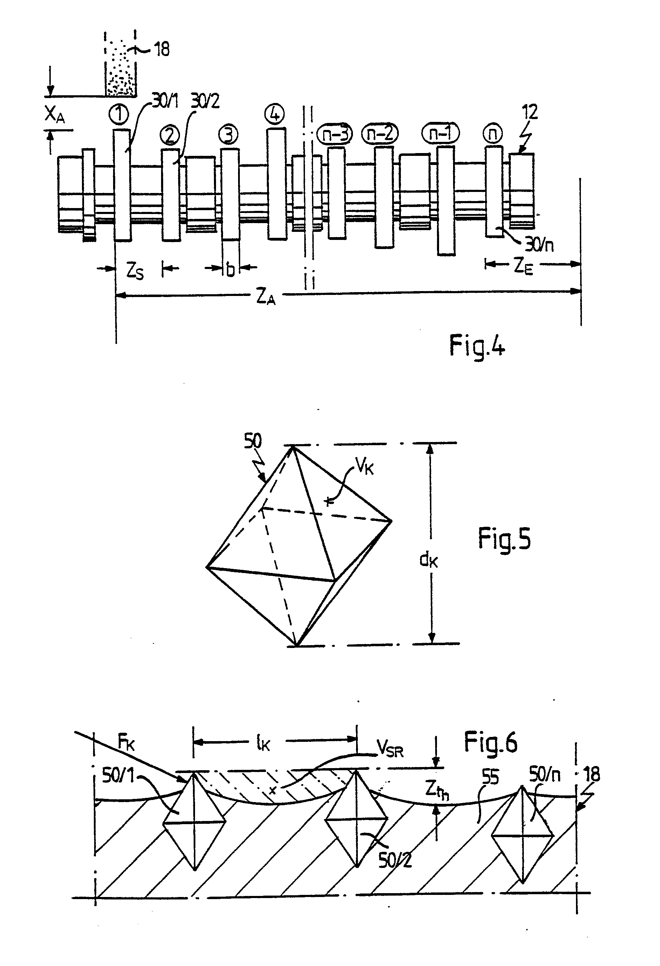

Fig. 4 zeigt eine Nockenwelle 12, wie sie mit dem erfindungsgemäßen Verfahren bearbeitet werden kann. Die Nockenwelle 12 weist in der allgemeinen Darstellung der Fig. 4 n Nocken 30/1, 30/2 ... 30/n auf. Typischerweise können nach dem erfindungsgemäßen Verfahren Nockenwellen 12 mit ingesamt 8 Nocken geschliffen werden.

Zu Beginn des Schleifprozesses sei die Schleifscheibe 18 in der Z-Achse so eingestellt, daß sie dem ersten Nocken 30/1 gegenübersteht. Der Abstand der Schleifscheibe 18 vom ersten Nocken 30/1 in der X-Achse 20 betrage einen Anfangswert $X_A$. Dieser Wert muß für das erfindungsgemäße Verfahren vorgegeben werden, damit die Nockenformschleifmaschine zu Beginn des Verfahrens diesen anfänglichen Zustellweg durchfahren kann, ehe die Schleifscheibe 18 in Anlage an den ersten Nocken 30/1 kommt.

Weiterhin muß hierfür die bereits erwähnte anfängliche Einstellung der Schleifscheibe 18 entlang der Z-Achse 21 vorgegeben werden, die durch das Anfangsmaß $Z_A$ gekennzeichnet ist.

In der nachfolgenden Bearbeitung mehrerer Nocken 30/1, 30/2 ... muß dann noch der sogenannte Nockensprung $Z_s$, d.h. der Abstand der Nocken 30/1, 30/2 ... in der Z-Achse 21 vorgegeben werden. Schließlich hat die Schleifscheibe 18 nach Bearbeitung des letzten Nockens 30/n ihre axiale Endstellung $Z_E$ erreicht, die gleichfalls vorzugeben ist.

Zur Bestimmung der Prozeßparameter muß ferner die Nockenbreite b eingegeben werden.

Um die Schleifscheibenparameter zu veranschaulichen, ist in Fig. 5 zunächst ein CBN-Korn 50, d.h. ein Kristall des Kubischen Bornitrides dargestellt, das idealerweise die Gestalt eines Oktaeders aufweist. Der Durchmesser des CBN-Kornes 50 sei mit $d_K$ und sein Volumen mit $V_K$ bezeichnet.

Wie Fig. 6 zeigt, sind in einer realen Schleifscheibe 18 mehrere dieser Körner 50, nämlich Körner 50/1, 50/2 ... 50/n in eine keramische Bindung 55 eingebunden. Die Konzentration der Körner 50 wird dabei mit K bezeichnet.

Der Abstand zwischen zwei Körner 50/1 und 50/2 betrage $I_K$ und der theoretische Kornüberstand betrage im statischen Mittel $Z_t$. Hieraus kann man das Spanraumvolumen $V_{SR}$ zwischen zwei Körnern 50/1, 50/2 ermitteln.

Mit $F_K$ ist in Fig. 6 schließlich noch die wirksame Kornkraft dargestellt, die beim Schleifen auf die Körner 50/1 ... einwirkt.

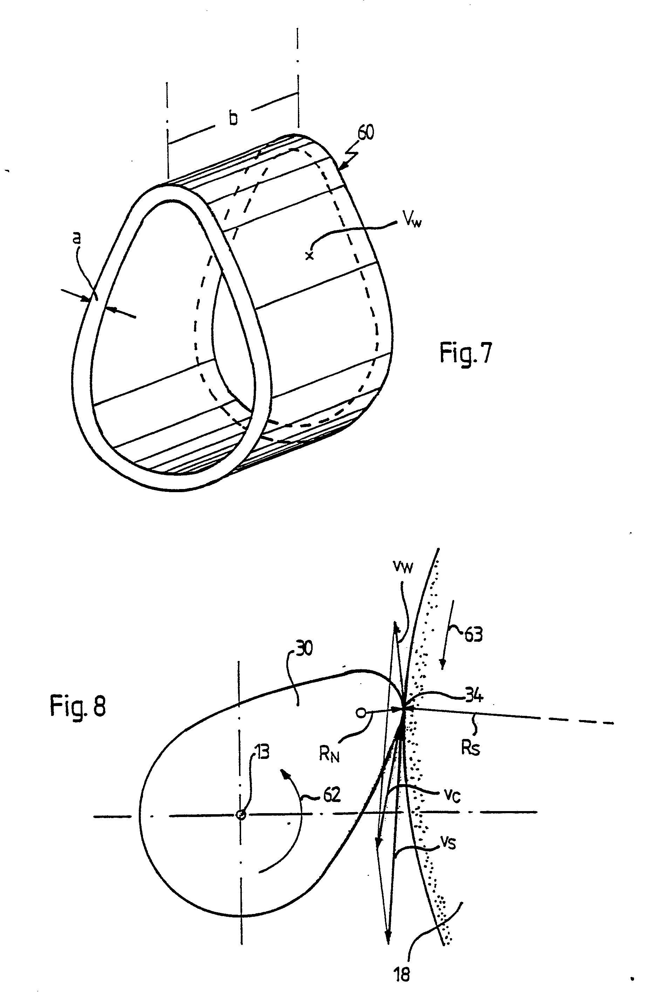

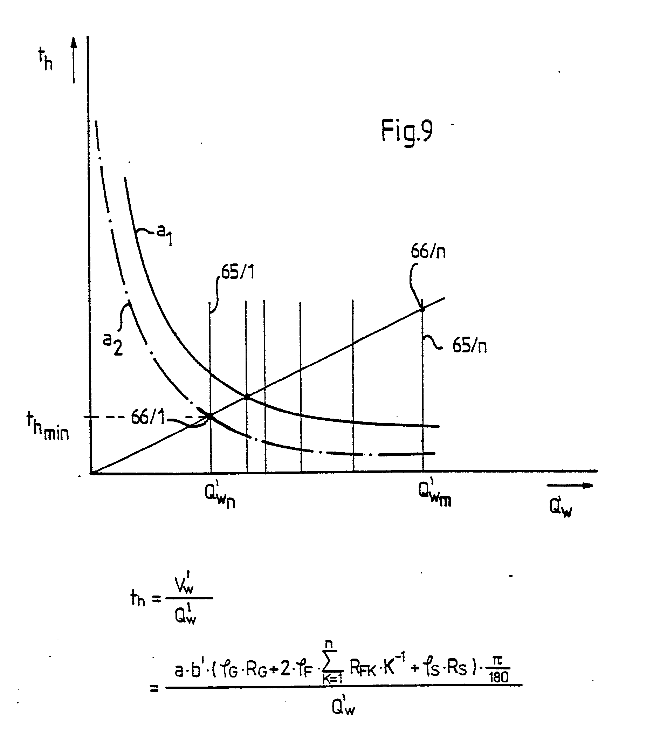

Fig. 7 zeigt in perspektivischer Darstellung zur Veranschaulichung ein zerspantes Volumen 60, wie es an einem Nocken abgespant wird, wenn eine Zustellung a bei einer Nockenbreite b eingestellt wird. Wie man leicht aus Fig. 7 erkennen kann, ergibt sich das Volumen $V_w$ als Produkt von Zustellung a, Breite b und Umfang des Nockens, wie es unten zu Fig. 9 noch erläutert wird.

Fig. 8 zeigt die Verhältnisse bei den wirkenden Geschwindigkeiten während des Nockenformschleifens.

Wie mit Pfeilen 62, 63 angedeutet, rotieren der Nocken 30 und die Schleifscheibe 18 gegenläufig. Am Eingriffspunkt 34 werden somit die Werkstückgeschwindigkeit $v_w$ und die Schleifscheibengeschwindigkeit $v_s$, jeweils als Umfangsgeschwindigkeiten dargestellt, wirksam. Die Richtungen der Geschwindigkeitsvektoren $v_w$ und $v_s$ ergeben sich aus den jeweiligen Radien $R_s$ der Schleifscheibe 18 und $R_n$ des Nockens 30, wie dies für den Nocken 30 weiter oben zu Fig. 3 bereits erläutert wurde.

Die Schnittgeschwindigkeit $v_c$ ergibt sich durch geometrische Addition der Vektoren $v_w$ und $v_s$ und läßt sich dem Betrage nach unter Zuhilfenahme des Kosinussatzes berechnen.

Fig. 9 zeigt schließlich ein Diagramm, in dem die Schleifzeit $t_h$ für einen Nocken über dem bezogenen Zeitspanvolumen $Q'_w$ aufgetragen ist.

Bekanntlich ist die Schleifzeit $t_h$ gleich dem Quotienten aus zerspantem Werkstückvolumen $V_w$ (vgl. Fig. 7) und dem bezogenen Zeitspanvolumen $Q'_w$. Der Umfang des Nockens 30 berechnet sich als Summe der Produkte von Umfangswinkeln $\phi$ und Radien R, wie in Fig. 9 mit der Beziehung

$$L_n = \varphi_G \cdot R_G + 2 \cdot \varphi_F \cdot \sum_{K=1}^{n} \frac{R_F \cdot k^{-1}}{K} + \varphi_s \cdot R_s \qquad [35]$$

angegeben ist. Da die Nockenbreite b konstant ist, hängt das zerspante Volumen $V_w$ somit nur noch von dem variablen Aufmaß a ab. Die Beziehung zwischen Schleifzeit $t_h$ und bezogenem Zeitspanvolumen $Q'_w$ drückt sich somit in einem hyperbolischen Verlauf aus, der nach a parametriert ist, wie dies in Fig. 9 für zwei Beispiele $a_1$ und $a_2$ dargestellt ist.

Allerdings ist man in der Wahl des bezogenen Zeitspanvolumens $Q'_w$ nicht frei, weil das einstellbare bezogene Zeitspanvolumen $Q'_w$ durch verschiedene Prozeßparameter begrenzt ist.

Diese zusätzlichen Randbedingungen lassen sich - ohne Anspruch auf vollzählige Nennung - anhand von empirisch gewonnenen Funktionen wie folgt erläutert:

Eine erste Randbedingung ist die erzielbare Rauhtiefe $r_t$ des Werkstücks sowie $r_{to}$ der Schleifscheibe 18. Mit diesen beiden Größen sowie der Konzentration K der Schleifscheibe 18 und der Schnittgeschwindigkeit $v_s$ läßt sich eine erste Beziehung für einen Grenzwert des bezogenen Zeitspanvolumens $Q'_w$ wie folgt darstellen

$$Q_{w1}' = \left( \frac{R_t - R_{to}}{K \cdot (v_c)^{-0,8}} \right)^{1,25} \qquad [36]$$

Als zweite Randbedingung läßt sich der Formfehler $f_m$ des Nockens angeben, der bekanntlich der Quotient von Schnittkraft $F_c$ und Systemsteifigkeit $C_g$ ist. Dann ergibt sich unter Berücksichtigung der Nockenbreite b folgende Beziehung:

$$Q_{w2}' = \frac{1}{b} \cdot \left(\frac{C_g \cdot v_c}{1,754}\right)^{2,78} (f_a)^{2,78} \qquad [37]$$

mit

$$f_a = \frac{F_c}{C_g} \qquad [38]$$

Als dritte Randbedingung läßt sich der Werkzeugverschleiß $r_s$ in Abhängigkeit vom Spanraumfüllungsgrad $f_g$, dem Kornüberdeckungsfaktor $\Delta b_s$ sowie dem theoretischen Kornüberstand $Z_r$ wie folgt angeben:

$$Q_{w3}' = 0,039 \cdot \left(\frac{r_s}{(0,75 - f_g)Z}\right)^{2,5} \qquad [39]$$

wobei Z eine Hilfsgröße ist und der Beziehung

$$Z = \left(\frac{W_m^3}{K}\right)^{0,05} \cdot (d_k)^{0,25} \cdot (q \cdot d_{eq})^{0,1} \cdot \frac{1}{v_c}^{0,4} \qquad [40]$$

gehorcht.

Als vierte Randbedingung läßt sich die Temperatur $T_M$ angeben, und es ergibt sich die Beziehung:

$$Q_{w4}' = \left(\frac{T_M - T_R}{419,2 \cdot 10^3 \cdot \frac{K}{c\,\rho}}\right)^{-1,563} \cdot \frac{1}{b} \qquad [41]$$

Als weitere Randbedingung ergeben sich unter Berücksichtigung einer Antriebsleistung P des Motors 19 von beispielsweise 22 kW sowie unter Berücksichtigung maximaler Winkelgeschwindigkeiten $\omega_{max}$ von 10000° C/min im Erhebungsbereich und 3000°/min auf dem Grundkreis die Beziehungen

$$Q_{w5}' = 1131,183 \cdot \frac{1}{b} \qquad [42]$$

in Abhängigkeit von der Nockenbreite b sowie die Beziehung

$$Q_{w6}' = 0,694 \cdot V_w' \qquad [43]$$

in Abhängigkeit von zerspanten Werkstückvolumen.

In der Darstellung der Fig. 9 ist schraffiert ein schraffiert ein Bereich der zulässigen Werte eingezeichnet, wobei Geraden 65/1 ... 65/n die vorstehen erläuterten Randbedingungen $Q_w'$ wiedergeben und deren Schnittpunkte 66/1 ... 66/n mit den a-Hyperbeln auf einer Geraden liegen.

Je nachdem, welche und wieviele der vorstehend genannten Randbedingungen berücksichtigt werden sollen, ist jeweils als begrenzende Randbedingung diejenige mit dem niedrigsten bezogenen Zeitspanvolumen $Q_w'$ zu berücksichtigen, um danach die Zustellung a als minimalen, jedoch optimalen Wert zu bestimmen, der dann zur minimalen Schleifzeit $t_h$ min führt.

Die zur Durchführung des erfindungsgemäßen Verfahrens vorgesehene Steuerung soll nun anhand des Flußdiagrammes der Fig. 10/1 bis 10/12 erläutert werden.

In einem ersten Block 70 wird ein Bestimmungsprogramm dadurch gestartet, daß zunächst in einem Block 71 die Eingabedaten entweder individuell vorgegeben oder aus maschinenspizifischen Dateien abgerufen werden.

Als Schleifmaschinendaten werden die maximale Leistung $P_{max}$ des Antriebsmotors 19 der Schleifscheibe 18 von beispielsweise 22 kW aufgerufen. Als nächstes werden die maximalen Winkelgeschwindigkeiten der Werkstückaufnahme 11 der C-Achse 13 aufgerufen, die zwischen 10000 und 30000°/min betragen können. Schließlich ist noch die Steifigkeit $C_g$ der Maschine zu berücksichtigen.

Als Nockendaten werden zunächst der Werkstoff W anhand der bereits erwähnten Tabelle typischer Nockenwellenwerkstoffe aufgerufen. Weiterhin werden das Gesamtaufmaß A und die Nockenzahl n der Nockenwelle 12 vorgegeben. Hinsichtlich der Nockenkontur sind der Grundkreisradius $R_G$ sowie die Kontur selbst, beispielsweise in Form der bereits erwähnten Erhebungswerttabelle $E_{(\Theta)}$ anzugeben. Die Nockenbreite b ist einzugeben ebenso wie der Anstellweg $X_A$ der Schleifscheibe 18 in Richtung der X-Achse 20 und die Anfangsposition $Z_A$ der Schleifscheibe 18 in Richtung der Z-Achse 21 sowie die Endposition $Z_E$ in dieser Achse 21 und der Nockensprung $Z_S$.

Als Nockenspezifikationen werden die Rauhtiefe $R_Z$ sowie der Formfehler $f_m$ vorgegeben. Hinsichtlich der thermischen Randzonenbeeinflussung, symbolisiert durch $\vartheta_{RZ}$ kann der Benutzer durch J/N eine Ja/Nein-Entscheidung herbeiführen, mit der Wirkung, daß die weitere Bestimmung der Parameter entweder mit oder ohne Berücksichtigung des thermischen Randzonenphänomens durchgeführt wird.

Die Schleifscheibendaten werden ebenfalls in tabellierter Form vorgegeben und zwar für eine endliche Anzahl von in der Praxis verfügbaren CBN-Schleifscheiben. Für jede dieser Schleifscheiben lassen sich der Schleifscheibendurchmesser $d_S$ sowie die Korngröße B und die Konzentration K in der bekannten Weise angeben. Eine Vielflächnerkonstante $q_m$, die im Falle eines Oktaeders 1,4 beträgt ist ebenso vorgegeben, wie das theoretische Vielflächnervolumen $W_m$, das ebenfalls nach Art der Vielflächner tabelliert vorgegeben werden kann, sofern unterschiedliche Vielflächner für unterschiedliche Schleifscheibenbeläge vorgesehen sind.

Weiterhin sind der Kornüberdeckungsfaktor $\Delta b_s$, die zulässige maximale Kornkraft $F_{Kzul}$ für die Schleifscheibe und als Konditionierungsparameter die Abrichtzustellung $a_d$ und die Geschwindigkeiten der Abrichtrolle $V_{fd}$, $V_{fd}'$, in Gegenrichtung vorzugeben.

Als konstante Bearbeitungsparameter sind die Schleifscheibenumfangsgeschwindigkeit $v_S$, die Zahl der zu bearbeitenden Werkstücke pro Stunde $N_w$ und schließlich das Konditionierungsintervall der Schleifscheibe $T_s$ anzugeben.

Schließlich werden im Verlaufe des erfindungsgemäßen Verfahrens zahlreiche Konstanten benötigt, die größtenteils empirisch gewonnen wurden und daher in gewissen Grenzen schwanken können. In der weiterfolgenden Erläuterung des erfindungsgemäßen Verfahrens werden diese Konstanten jeweils als konkrete Zahlenwerte angegeben, es versteht sich jedoch, daß diese Zahlenwerte aus den genannten Gründen auch gewissen Schwankungen unterliegen können.

Aus den im Block 71 angegebenen Eingangsgrößen wird nun im Block 72 zunächst die Nockengeometrie nach weiteren Kennwerten berechnet. So wird der Werkstückdurchmesser $d_W$, der Flankenradius $R_F$ in Form einer Tabelle, der Spitzenradius $R_S$, der maximale Erhebungswert $E_{max}$ sowie der Grundkreiswinkel $\phi_G$, der Flankenwinkel $\phi_F$ und der Spitzenwinkel $\phi_S$ ermittelt.

In Abhängigkeit von der Erhebungstabelle und der maximalen Winkelgeschwindigkeit der C-Achse 13 wird nun die Nockenumfangsgeschwindigkeit $v_W$ im Block 73 berechnet.

Im Block 74 wird über den Kosinussatz im Wege der vektoriellen Addition aus der Nockenumfangsgeschwindigkeit $v_W$ und der Schleifscheibengeschwindigkeit $v_S$ die Schnittgeschwindigkeit $v_C$ der Schleifscheibe 18 bestimmt.

Im Block 75 werden nun die Werte $R_G$, $R_F$, $R_S$, $E_{max}$, $\phi_G$, $\phi_F$, $\phi_S$, b, $X_A$, $Z_A$, $Z_E$ und $Z_S$ ausgegeben und zwar in der bereits eingangs erwähnten Menü-Technik in Form eines Graphikdialoges mit dem Anwender des erfindungsgemäßen Verfahrens. Hierzu kann in einer Maske die Nockenwelle in zwei Seitenansichten dargestellt werden, wobei die im Block 75 aufgezählten Werte graphisch veranschaulicht sind.

Parallel zur Ausgabe im Block 75 wird im Block 76 das Verhältnis von Schnittgeschwindigkeit $v_C$ und Werkstückgeschwindigkeit $v_W$ als Quotient q berechnet.

Im Block 77 wird als Hilfsgröße ein effektiver Durchmesser $d_{eq}$ aus den Durchmessern von Werkstück $d_W$ und Schleifscheibe $d_S$ ermittelt.

Im Block 78 wird die Schnittkraft $f_c$ anhand einer empirischen Formel aus der maximalen Leistung $P_{max}$ des Antriebsmotors 19 ermittelt.

Mit Hilfe der bereits in Fig. 9 angegebenen und erläuterten Beziehung wird nun im Block 79 die theoretisch minimale Schleifzeit $t_h$ min aus der Nockengeometrie und den erzielbaren Winkelgeschwindigkeiten $\omega$ bestimmt.

Hieraus wird im Block 80 als zentrale Größe des erfindungsgemäßen Verfahrens das maximale bezogene Zeitspanvolumen $Q'_{wmax}$ über eine empirisch gewonnene Formel aus der maximalen Leistung

15

$P_{max}$ des Antriebsmotors 19 der Schleifscheibe 18 ermittelt.

Aus den beiden so erhaltenen Werten der Blöcke 79 und 80 läßt sich das maximale zerspante Werkstückvolumen $V'_{Wmax}$ bestimmen.

Mit Hilfe der vollständigen in Fig. 9 dargestellten und erläuterten Beziehung wird nun im Block 82 als Ausgangsgröße für das erfindungsgemäße Verfahren eine maximale Zustellung $a_{max}$ der Schleifscheibe 18 bestimmt.

Diese maximale Zustellung $a_{max}$ soll nun im weiteren Vorgehen daraufhin überprüft werden, ob sie in Bezug auf verschiedene Restriktionen des verwendeten Systems zulässig ist.

Um dies zu bewerkstelligen wird zunächst in einem Block 83 als zentrale Rechengröße wieder das maximale bezogene Zeitspanvolumen $Q'_{wi}$ als Maximalwert $Q'_{wmax}$ vorgegeben.

Wie bei 84 angedeutet, kann dieser maximale Ausgangswert $Q'_{wmax}$ im nachfolgenden Verfahren durch verschiedene Schleifendurchgänge noch dekrementiert werden, wie dies im einzelnen noch erläutert werden wird.

In der ersten Verfahrensschleife wird im Block 85 aus der vorgegebenen Rauhtiefe $R_Z$ für die fertig bearbeitete Nockenoberfläche mittels der Schleifscheibentabelle eine bestimmte Schleifscheibentype ausgewählt, mit der die genannte Rauhtiefe $R_Z$ erzielt werden kann. Dadurch liegen die Korngröße B und die Konzentration K und damit auch der Korndurchmesser $d_K$ fest. Die ermittelte Schleifscheibentype wird im Block 86 ausgegeben und zwar wiederum in den Graphikdialog der Menüsteuerung eingeblendet.

Das weitere Verfahren vollzieht sich nun anhand der Gleichungen ( 1 ) bis ( 42 ), die weiter oben im einzelnen erläutert wurden. Auf diese Gleichungen wird im folgenden Bezug genommen.

In Block 87 wird mit Hilfe von Gleichung ( 17 ) die Korndichte $C_K$ berechnet.

In Block 88 wird die flächenbezogene kinematische Schneidenzahl $N_{kin}$ mit Hilfe von Gleichung ( 18 ) bestimmt.

In Block 89 wird mit Hilfe von Gleichung ( 19 ) das Einzelspanvolumen $V_{ES}$ berechnet.

In Block 90 wird daraus mit Hilfe der Gleichung ( 20 ) der theoretische Kornüberstand $Z_{th}$ bestimmt.

Mit Hilfe von Gleichung ( 21 ) folgt daraus der reale Kornüberstand $Z_r$ in Block 91, mit Hilfe von Gleichung ( 22 ) folgt in Block 92 daraus der Kornabstand $l_K$ und schließlich mit Hilfe von Gleichung ( 23 ) in Block 93 das Spanraumvolumen $V_{SR}$.

Mit Hilfe von Gleichung ( 24 ) läßt sich in Block 94 dann schließlich der Spanraumfüllungsgrad $f_g$ bestimmen.

Im Entscheidungsblock 95 wird nun überprüft, ob der Spanraumfüllungsgrad $f_g$ kleiner oder gleich einem vorgegebenen Grenzwert von beispielsweise 0,75 ist. Wenn dies nicht der Fall ist, wenn also das Spanraumvolumen $V_{SR}$ nicht groß genug ist, um die Einzelspäne mit ihrem Einzelspanvolumen $V_{ES}$ aufzunehmen, so wird über einen Block 96 die Ausgangsgröße dieser Verfahrensschleife, nämlich das bezogene Zeitspanvolumen $Q'_{wi}$ dekrementiert und zwar um einen vorgegebenen Betrag $\Delta Q'_w$. Mit diesem dekrementierten Wert kehrt das Verfahren wieder zu dem bereits erläuterten Punkt 84 hinter Block 83 zurück, um die vorstehend erläuterten Verfahrensschritte solange zu vollziehen, bis das bezogene Zeitspanvolumen $Q'_{wi}$ soweit dekrementiert wurde, daß der Spanraumfüllungsgrad ausreichend bemessen ist.

Sobald dies der Fall ist, setzt das Verfahren seine Schritte fort und berechnet in Block 97 mit Hilfe von Gleichung ( 25 ) den Kornverschleißfaktor $r_S$.

Mit Hilfe von Gleichung ( 26 ) wird dann in Block 98 der Gesamtverschleiß $V_{VS}$ berechnet und unter Zuhilfenahme von Gleichung ( 27 ) wird in Block 99 das zerspante Werkstoffvolumen $V_{WG}$ bestimmt.

Daraus ergibt sich in Block 100 mit Hilfe von Gleichung ( 28 ) das Abtragsverhältnis G und in Block 101 mit Hilfe von Gleichung ( 5 ) die Kontaktlänge $l_g$.

In Block 102 wird mit Hilfe von Gleichung ( 30 ) die Kontaktfläche $A_K$ und in Block 103 mit Hilfe von Gleichung ( 29 ) schließlich die Einzelkornkraft $F_K$ berechnet.

Im Entscheidungsblock 104 wird nun überprüft, ob die Einzelkornkraft $F_K$ kleiner oder gleich einer zulässigen Einzelkornkraft $F_K$ zul ist. Ist dies nicht der Fall, ist also mit anderen Worten die Belastung des einzelnen Kornes zu hoch, wird im Block 105 wiederum die zentrale Verfahrensgröße, nämlich das bezogene Zeitspanvolumen $Q'_{wi}$ um den Betrag $\Delta Q'_{wi}$ dekrementiert, wobei der Dekrementierungsbetrag $\Delta Q_{wi}$ gleich demjenigen des Blocks 96 oder auch anders bemessen sein kann. Auch in diesem Falle kehrt das Programm über die Schleife zum Punkt 84 zurück, um mit dem dekrementierten Wert für $Q'_{wi}$ weiter zu rechnen und zwar solange, bis die Einzelkornkraft $F_K$ auf den zulässigen Wert $F_{kzul}$ abgesunken ist.

Es sei an dieser Stelle eingefügt, daß die beiden vorstehend erläuterten Verfahrensschleifen als Optionen zu verstehen sind, nach denen das Verfahren betrieben werden kann. So ist es durchaus - wie bereits erwähnt - möglich, das vorstehend beschriebene Verfahren bereits mit dem Block 85 abzubrechen und unter Einsatz der dort bestimmten Schleifscheibe vorzugehen, wobei dann allerdings weder die Spanraumfüllungsverhältnisse noch die Einzelkornbelastungsverhältnisse berücksichtigt werden. Setzt man hingegen das Verfahren fort, so werden zunächst die Spanraumfüllungsverhältnisse bis hin zum Block 95 berücksichtigt, bei dessen Erreichen das erfindungsgemäßen Verfahren alternativ abgebrochen werden kann. Das am Ja-Ausgang des Blockes 95 ermittelte bezogene Zeitspanvolumen $Q_w{}'$ kann dann mit Hilfe der Blöcke 81 und 82 in eine maximale Zustellung $a_{max}$ der Schleifscheibe 18 umgerechnet werden, die dann naturgemäß kleiner ist als der Betrag, der beim ersten Durchlaufen des erfindungsgemäßen Verfahrens am Ausgang des Blockes 82 ermittelt wurde.

Schleift man nun die Nockenwelle 12 mit der Schleifscheibe 18 unter Einstellung der so einmalig verminderten Zustellung a, so ist zum einen die in Block 80 angegebene Restriktion hinsichtlich der maximalen Leistung $P_{max}$ des Antriebsmotors 19 der Schleifscheibe 18 wie auch die Restriktion hinsichtlich der Spanraumfüllungsverhältnisse des Blocks 94 erfüllt.

Läßt man hingegen das erfindungsgemäße Verfahren auch die zweite Schleife bishin zum Block 104 durchlaufen und ermittelt man auf der Grundlage des am Ausgang des Blocks 104 anliegenden zweimal dekrementierten bezogenen Zeitspanvolumens $Q_w{}'$ ein entsprechend zweimal vermindertes Aufmaß a, so führt dessen Vorgabe beim realen Schleifen einer Nockenwelle 12 zu einem Schleifvorgang, der zusätzlich die Restriktion der Einzelkornbelastung berücksichtigt.

Es versteht sich dabei, daß bei fortschreitender Berücksichtigung von Restriktionen und somit fortschreitender Verminderung des bezogenen Zeitspanvolumens $Q_w{}'$ sowie der Zustellung a auch eine Erhöhung der Schleifzeiten $t_h$ eintritt.

Entsprechende Überlegungen gelten für die nachfolgend noch weiter angegebenen Restriktionen, die wahlweise einzeln oder in beliebigen Kombinationen zusätzlich berücksichtigt werden können.

Im Block 106 wird unter Zuhilfenahme von Gleichung ( 36 ) die Rauhtiefe als Restriktionskriterium herangezogen und es wird daraus ein Wert des bezogenen Zeitspanvolumens $Q'_{w1}$ berechnet. Im Entscheidungsblock 107 wird nun überprüft, ob der so ermittelte Wert $Q_{w1}{}'$ größer oder gleich dem gerade anliegenden Verfahrenswert $Q'_{wi}$ ist, der nach Durchlaufen des Verfahrens bis Block 83 und ggf. bis Block 95 und/oder bis Block 104 ermittelt wurde.

Ergibt sich dabei daß der neu ermittelte Wert $Q_{w1}{}'$ kleiner ist, so muß dieser neue Wert $Q_{wi}{}'$ über den Block 108 als neuer Verfahrensparameter für $Q_{wi}{}'$ vorgegeben werden, wenn die Rauhtiefe als Restriktionskriterium berücksichtigt werden soll.

Ergibt sich jedoch, daß der neu ermittelte Wert $Q_{wi}{}'$ größer ist als der gerade anstehende Wert $Q_{wi}{}'$, so kann das Restriktionskriterium der Rauhtiefe übergangen werden, weil seine Auswirkungen innerhalb des bereits berücksichtigten Bereiches der Prozeßparameter liegen.

Zur Berücksichtigung des nächsten Restriktionskriteriums des Formfehlers $f_m$ muß dieser zunächst in Block 109 mit Hilfe von Gleichung ( 38 ) berechnet werden. In Block 110 wird dann das nächste Restriktionskriterium mit Hilfe von Gleichung ( 37 ) angesetzt und über die Blöcke 111, 112 wird wiederum eine Entscheidung herbeigeführt, wie dies zuvor schon zu den Blöcken 107, 108 erläutert wurde.

Im Block 113 wird als nächstes Restriktionskriterium der Werkzeugverschleiß $r_s$ unter Zuhilfenahme von Gleichung ( 39 ) berücksichtigt und wiederum über die Blöcke 114, 115 eine Entscheidung herbeigeführt.

Im Block 116 wird als nächstes Restriktionskriterium die Temperatur $T_M$ unter Zuhilfenahme von Gleichung ( 41 ) berücksichtigt und in den Blöcken 117, 118 die entsprechende Entscheidung herbeigeführt.

Block 119 ermittelt als nächstes Restriktionskriterium unter Zuhilfenahme von Gleichung ( 42 ) die Maschinendaten mit nachfolgender Entscheidung in den Blöcken 120, 121 und in entsprechender Weise berechnet Block 122 mit Hilfe von Gleichung ( 43 ) ein weiteres Restriktionskriterium anhand von Maschinendaten mit nachfolgender Entscheidung in den Blöcken 123 und 124.

Im nachfolgenden Block 125 werden nun zur Schleifscheibenauslegung die Schleifscheiben spezifischen Werte, $d_S$, $W_m$, K, $d_K$, $Z_{th}$, $l_g$ und $V_{SR}$ in den Graphikdialog der Menüführung eingeblendet.

Entsprechendes gilt in Block 126 für die Ausgabe von Werten der Schleifscheibenkonditionierung, wo beispielsweise die Werte $a_d$, $V_{fd}$, $V'_{fd}$, q, $r_s$, $T_s$, G, $N_{kin}$, $V_{ES}$, $F_G$ und $f_K$ in den Graphikdialog eingeblendet werden.

Schließlich werden in Block 127 noch als Bearbeitungsparameter der vorgewählte Werkstoff W und zur Schleifscheibentype noch die Werte $V_C$, $\omega$, $V_{WG}$, $Q'_{wimax}$ und $t_h$ bzw. unter Berücksichtigung der Verfahrwege der Schleifscheibe in Z- und X-Richtung (ohne Bearbeitung) der Gesamtschleifzeit angegeben.

Die Ermittlung der zu berücksichtigen Verfahrensparameter endet dann im Block 128 und es werden nun die ermittelten Werte als Betriebsparameter für die Nockenformschleifmaschine 10 in das NC-Steuergerät 25 bzw. dessen Ausgangsschnittstellen der Datenleitungen 27 und 28 überspielt, um nun die Nocken 30 der Nockenwelle 12 in der ermittelten Form zu schleifen.

17

**Ansprüche**

1. Verfahren zum Schleifen von Nocken (30) einer Nockenwelle (12) mittels einer numerisch gesteuerten Nockenwellenschleifmaschine (10), bei der die Nockenwelle (12) in einer Werkstückaufnahme (11) mit vorgegebener Winkelgeschwindigkeit ($\omega$) in vorbestimmten Winkelschritten ($\Theta$) um ihre Längsachse (13) drehbar angeordnet ist und ein Schleifschlitten (17) mit einer Schleifscheibe (18) in einer Achse (20) senkrecht zur Längsachse (13) in vorgegebenen Schritten zustellbar ist, wobei in Abhängigkeit von der Geometrie, dem Werkstoff und der gewünschten Oberflächenbeschaffenheit der Nockenwelle (12) und der Nocken (30) eine Schleifscheibe (18) in ihrer Beschaffenheit zur Bearbeitung ausgewählt und die Zustellung (a) der Schleifscheibe (18) eingestellt wird, gekennzeichnet durch die Verfahrenschritte:
- Bestimmen einer minimalen Schleifzeit ($t_{hmin}$) aus der Geometrie der Nocken (30) sowie der maximalen Winkelgeschwindigkeit ($\omega_{max}$);
- Bestimmen eines maximalen bezogenen Zeitspanvolumens ($Q'_{wmax}$) in Abhängigkeit von der maximalen Antriebsleistung ($P_{max}$) des Schleifscheibenantriebes (19);
- Bestimmen eines maximalen zerspanten Werkstückvolumens ($V'_{wmax}$) aus der minimalen Schleifzeit ($t_{hmin}$) sowie dem maximalen bezogenen Zeitspanvolumen ($Q'_{wmax}$);
- Bestimmen einer maximalen Zustellung ($a_{max}$) aus dem maximalen zerspanten Werkstückvolumen ($V'_{wmax}$) und der Geometrie der Nocken (30);
- Bestimmen eines Schleifscheibentypes aus einer Tabelle vorgegebener Schleifscheibentypen in Abhängigkeit von der vorgegebenen Rauhtiefe ($R_Z$) der Nocken (30);
- Schleifen der Nocken (30) mittels der bestimmten Schleifscheibe (18) unter Einstellung der maximalen Zustellung ($a_{max}$).

2. Verfahren nach Anspruch 1, gekennzeichnet durch die weiteren Schritte:
- Bestimmen des Spanraumfüllungsgrades ($f_g$) aus den maximalen bezogenen Zeitspanvolumen ($Q'_{wmax}$);
- Vergleichen des ermittelten Spanraumfüllungsgrades ($f_g$) mit einer Grenzwert ($K_{11}$);
- Vermindern des maximalen bezogenen Zeitspanvolumens ($Q'_{wmax}$) bis der Spanraumfüllungsgrad ($f_g$) den Grenzwert ($K_{11}$) nicht unterschreitet;
- Bestimmen der zugehörigen maximalen Zustellung ($a_{max}$) aus dem verminderten maximalen bezogenen Zeitspanvolumen ($Q'_{wmax}$);
- Schleifen der Nocken (30) mittels der bestimmten Schleifscheibe (18) unter Einstellung der maximalen Zustellung ($a_{max}$).

3. Verfahren nach Anspruch 2, gekennzeichnet durch die weiteren Schritte:
- Bestimmen der Einzelkornkraft ($F_K$) aus dem maximalen bezogenen Zeitspanvolumen ($Q'_{wmax}$);
- Vergleichen der ermittelten Einzelkornkraft ($F_K$) mit einem Grenzwert ($F_{Kzul}$);
- Vermindern des maximalen bezogenen Zeitspanvolumens ($Q'_{wmax}$) bis die Einzelkornkraft ($F_K$) den Grenzwert ($F_{Kzul}$) nicht überschreitet;
- Bestimmen der zugehörigen maximalen Zustellung ($a_{max}$) aus dem verminderten maximalen bezogenen Zeitspanvolumen ($Q'_{wmax}$);
- Schleifen der Nocken (30) mittels der bestimmten Schleifscheibe (18) unter Einstellung der maximalen Zustellung ($a_{max}$).

4. Verfahren nach einem oder mehreren der Ansprüche 1 bis 3, dadurch gekennzeichnet, daß aus einer weiteren Randbedingung ein maximales bezogenes Zeitspanvolumen ($Qw'$) bestimmt wird und daß das jeweils größere Zeitspanvolumen ($Qw'$) zur Bestimmung der maximalen Zustellung (a) und zum Schleifen der Nocken (30) herangezogen wird.

5. Verfahren nach Anspruch 4, dadurch gekennzeichnet, daß die weitere Randbedingung die Rauhtiefen ($R_Z$, $R_t$) von Nocken (30) und Schleifscheibe (18) sind.

6. Verfahren nach Anspruch 4 oder 5, dadurch gekennzeichnet, daß die weitere Randbedingung der Formfehler ($f_m$) der Nocken (30) ist.

7. Verfahren nach einem oder mehreren der Ansprüche 4 bis 6, dadurch gekennzeichnet, daß die weitere Randbedingung die Schnittleistung (P) der Nockenwellenschleifmaschine (10) ist.

8. Verfahren nach einem oder mehreren der Ansprüche 4 bis 7, dadurch gekennzeichnet, daß die weitere Randbedingung der Verschleiß ($r_s$) der Schleifscheibe (18) ist.

9. Verfahren nach einem oder mehreren der Ansprüche 4 bis 8, dadurch gekennzeichnet, daß die weitere Randbedingung die Randzonentemperatur ($T_M$, $T_R$) der Nocken (30) ist.

10. Verfahren nach einem oder mehreren der Ansprüche 4 bis 9, dadurch gekennzeichnet, daß die weitere Randbedingung das zerspante Werkstückvolumen ($V_W$) ist.

Fig.1

Fig.2

Fig. 3

Fig.4

Fig.5

Fig.6

2001P138EP

Fig. 7

Fig. 8

2001P138EP

Fig.9

$$t_h = \frac{V'_w}{Q'_w}$$

$$= \frac{a \cdot b' \cdot (\ell_G \cdot R_G + 2 \cdot \ell_F \cdot \sum_{K=1}^{n} R_{FK} \cdot K^{-1} + \ell_S \cdot R_S) \cdot \frac{\pi}{180}}{Q'_w}$$

Fig. 10/1

70

( START )

71

## EINGABE

### Schleifmaschinendaten

$P_{max}$        maximale Maschinenleistung

$\left.\begin{array}{l} \omega_{Gmax} \\ \omega_{Fmax} \\ \omega_{Smax} \end{array}\right\}$    maximale Winkelgesch. C-Achse

$C_g$        Steifgkeit Maschine

### Nockendaten

W        Werkstoff (Tabelle)

A        Aufmaß

n        Nockenzahl

$R_G$        Grundkreisradius

$E_{(-)}$        Erhebungswert (Tabelle)

b        Nockenbreite

$X_A$        Anstellweg Schleifscheibe X-Achse

$Z_A$        Anfangsposition Schleifscheibe Z-Achse

$Z_E$        Endposition Schleifscheibe Z-Achse

$Z_S$        Nockensprung

### Nockenspezifikation

$R_z$        Rauhtiefe

$f_m$        Formfehler

$\sqrt[\circ]{}_{RZ}$        Therm. Randzonenbeeinflussung (J/N)

( 2 )

2001P138EP

②

**Schleifscheibendaten**

| | |
|---|---|
| $d_S$ | Schleifscheibendurchmesser |
| $d_K$, K | Korngröße / Konzentration ( Tabelle ) |
| $q_m$ | Vielflächnerkonstante (Oktaeder: 1,4 ) |
| $W_m$ | theor. Vielflächnervolumen |
| $\Delta b_S$ | Kornüberdeckungsfaktor |
| $F_{Kzul}$ | zulässige max. Kornkraft |
| $a_d$ | Abrichtstellung |
| $v_{fd}$, $v_{fd}$ | Geschw. Abrichtrolle |

Fig.10/2

~ 71

**Konstante Bearbeitungsparameter**

| | |
|---|---|
| $v_S$ | Schleifscheibenumfangsgeschwindigkeit |
| $N_W$ | Zahl der bearb. Werkstücke / Stunde |
| $T_S$ | Konditionierungsintervall Schleifscheibe |

**Konstanten**

| | |
|---|---|
| $m_1$ | $n_1$ |
| $p_1$ | $m_2$ |
| $n_2$ | $p_2$ |
| y | $K_1 ...... K_n$ |

---

**BERECHNE**

Aus Erhebungswerttabelle

~ 72

| | |
|---|---|
| $d_W = 2 \cdot R_G$ | Werkstückdurchmesser |
| $R_F$ | Flankenradius (Tabelle) |
| $R_S$ | Spitzenradius |
| $E_{max}$ | maximaler Erhebungswert |
| $\varphi_G$ | Grundkreiswinkel |
| $\varphi_F$ | Flankenwinkel |
| $\varphi_S$ | Spitzenwinkel |

③

2001P138EP

Fig.10/3

③

```
BERECHNE                                    ⌐73

vW          Nockenumfangsgeschwindigkeit
vW = f(ω, Ė(⊖))
```

```
BERECHNE                                    ⌐74

vC          Schnittgeschw. Schleifscheibe
vC = f(vW, vS)
```

```
AUSGABE                          ⌐75

RG          RF          RS
Emax        ℓG          ℓF
ℓS          b           XA
ZA          ZE          ZS
```

```
BERECHNE                                       ⌐76

q           Verhältnis Schnittgeschw./Werkstückgeschw.
q = vC / vW
```

```
BERECHNE

deq         effektiver Durchmesser        ⌐77

deq = (dS · dW) / (dS + dW)
```

④

2001P138EP

Fig. 10/4

④

**BERECHNE** — 78

$F_C$      Schnittkraft

$$F_C = \frac{P_{max}}{v_C} \cdot 10^3$$

**BERECHNE** — 79

$t_{h\,min}$      minimale Haupt-Schleifzeit

$$t_{h\,min} = \frac{\ell_G \cdot 60}{\omega_G} + 2 \cdot \frac{\ell_F \cdot 60}{\omega_F} + \frac{\ell_S \cdot 60}{\omega_S}$$

**BERECHNE** — 80

$Q'_{w\,max}$      max. bezogenes Zeitspanvolumen

$$Q'_{w\,max} = \frac{1}{b} \cdot \left(\frac{P_{max}}{K_2}\right)^{K_1}$$

$[\,K_1 = 1{,}754 \;\; ; \;\; K_2 = 2{,}778\,]$

**BERECHNE** — 81

$V'_{W\,max}$      max. zerspantes Werkstückvolumen

$$V'_{W\,max} = Q'_{w\,max} \cdot t_{h\,min}$$

**BERECHNE** — 82

$a_{max}$      max. Zustellung der Schleifscheibe

$$a_{max} = \frac{V'_{W\,max}}{\frac{\pi}{180} \cdot b \cdot \left(\ell_G \cdot R_G + 2 \cdot \ell_F \cdot \sum_{K=1}^{n} R_{FK} \cdot K^{-1} + \ell_S \cdot R_S\right)}$$

⑤

2001P138EP

⑤

Fig.10/5

83 — $Q'_{wi} = Q'_{w\,max}$

84

**BESTIMME** — 85

| | |
|---|---|
| K | Konzentration |
| $d_K$ | Korndurchmesser |

$d_K, K = f_{(R_Z)}$ (Tabelle)

**AUSGABE**

86

Schleifscheibentype
(Tabelle)

**BERECHNE** — 87

$C_K$     Korndichte

$$C_K = \frac{K}{\frac{1}{3} \cdot q_m \cdot W_m^3}$$

88

**BERECHNE**

$N_{kin}$     flächenbezogene kinematische Schneidenzahl

$$N_{kin} = K_3 \cdot \left(\frac{K}{W_m^3}\right)^{K_4} \cdot \left(\frac{Q'_{wi}}{q \cdot d_{eq} \cdot v_C}\right)^{K_5} \cdot 10^6$$

[ $K_3 = 0,928$ ; $K_4 = 0,598$ ; $K_5 = 0,201$ ]

⑥ₐ                        ⑥

Fig.10/6

BERECHNE — 89

$V_{ES}$     Einzelspanvolumen

$$V_{ES} = K_6 \cdot \left(\frac{W_m}{K}\right)^{m_1} \cdot \left(q \cdot d_{eq}\right)^{n_1} \cdot \left(\frac{Q'_{wi}}{v_C}\right)^{p_1}$$

$[\ K_6 = 4{,}32\ ;\ m_1 = 0{,}598\ ;\ n_1 = 0{,}201\ ;\ p_1 = 0{,}798\ ]$

BERECHNE — 90

$Z_{th}$     theoretischer Kornüberstand

$$Z_{th} = K_7 \cdot \left(\frac{W_m^3}{K}\right)^{m_2} \cdot (d_K)^y \cdot (q \cdot d_{eq})^{n_2} \cdot \left(\frac{Q_{wi}}{v_C}\right)^{p_2}$$

$[\ K_7 = 4{,}16\ ;\ m_2 = 0{,}05\ ;\ y = 0{,}25\ ;\ n_2 = 0{,}1\ ;\ p_2 = 0{,}4\ ]$

BERECHNE — 91

$Z_r$     realer Kornüberstand

$Z_r = K_8 \cdot Z_{th}$

$[\ K_8 = 0{,}62\ ]$

BERECHNE — 92

$l_K$     Kornabstand

$$l_K = 2 \cdot \frac{K_9 \cdot W_m^3}{3 \cdot K \cdot d_K}$$

$[\ K_9 = 1{,}41\ ]$

BERECHNE — 93

$V_{SR}$     Spanraumvolumen

$V_{SR} = (l_K - Z_r \cdot K_{10}) \cdot Z_r^2$

$[\ K_{10} = 1{,}41\ ]$

Fig.10/7

**BERECHNE** — 94

$f_g$       Spanraumfüllungsgrad

$$f_g = \frac{V_{ES}}{V_{SR}}$$

96

$Q^1_{wi} = Q^1_{wi} - \Delta Q^1_w$    nein

95

$f_g \leq K_{11}$ ?   [ $K_{11} = 0,75$ ]

ja

**BERECHNE**

$r_s$      Kornverschleißfaktor — 97

$r_s = ( K_{12} - f_g ) \cdot \Delta b_s \cdot Z_r$

[ $K_{12} = 0,75$ ]

**BERECHNE** — 98

$V_{VS}$      Gesamtverschleiß

$V_{VS} = \pi \cdot d_S \cdot r_s \cdot b \cdot 10^{-3}$

**BERECHNE**

99

$V_{WG}$      zerspantes Werkstoffvolumen

$V_{WG} = V^1_{W\,max} \cdot N_W \cdot T_S$

7a

8a

7

8

Fig.10 / 8

2001P138EP

Fig. 10 / 9

9a

9

BERECHNE ⌐106

$$Q'_{w1} = \left( \frac{R_z - Z_r}{K \cdot (v_c)^{K_{13}}} \right)^{K_{14}}$$

[ $K_{13} = -0,8$ ; $K_{14} = 1,25$ ]

108 ⌐

$Q'_{wi} = Q'_{w1}$ ◄── nein ── $Q'_{w1} \geq Q'_{wi}$ ? ⌐107

ja

BERECHNE ⌐109

$f_m$          Formfehler

$$f_m = \frac{F_c}{C_g}$$

BERECHNE ⌐110

$$Q'_{w2} = \left( \frac{C_g \cdot v_c}{K_{15}} \right)^{K_{16}} \cdot (f_m)^{K_{17}} \cdot \frac{1}{b}$$

[ $K_{15} = 1,754$ ; $K_{16} = 2,78$ ; $K_{17} = 2,78$ ]

112 ⌐

$Q'_{wi} = Q'_{w2}$ ◄── nein ── $Q'_{w2} \geq Q'_{wi}$ ? ⌐111

ja

10a

10

2001P138EP

⑩ₐ

⑩

Fig.10/10

**BERECHNE** ⌐113

$$Q'_{w3} = K_{18} \cdot \left( \frac{r_s}{(K_{19} - f_g) \cdot Z_r} \right)^{K_{20}}$$

$[ K_{18} = 0,039 ; K_{19} = 0,75 ; K_{20} = 2,5 ]$

115

$Q'_{wi} = Q'_{w3}$ ◁── nein ── 114 ◇ $Q'_{w3} \geq Q'_{wi}$ ?

ja

**BERECHNE** ⌐116

$$Q'_{w4} = \frac{\cdot 1}{\left( \dfrac{T_M - T_R}{K_{21} \cdot \dfrac{K}{C_g \cdot R}} \right)^{K_{22}} \cdot b}$$

$[ K_{21} = 419,2 \cdot 10^3 ; K_{22} = 1,563 ]$

118

$Q'_{wi} = Q'_{w4}$ ◁── nein ── 117 ◇ $Q'_{w4} \geq Q'_{wi}$ ?

ja

**BERECHNE** ⌐119

$$Q'_{w5} = K_{23} \cdot \frac{1}{b}$$

$[ K_{23} = 1131,183 ]$

⑪ₐ

⑪

2001P138EP

11a

11

120

$Q'_{w5} \geq Q'_{wi}$ ?

nein

$Q'_{wi} = Q'_{w5}$

121

ja

Fig.10/11

BERECHNE

122

$Q'_{w6} = K_{24} \cdot V'_{Wmax}$

[ $K_{24} = 0,694$ ]

$Q_{w6} \quad Q_{wi}$ ?

nein

$Q_{wi} = Q_{w6}$

124

ja

123

AUSGABE

Schleifscheibenauslegung

$d_S$

$W_m$

K

$d_K$

$Z_{th}$

$l_g$

$V_{SR}$

125

12

Fig.10 / 12

(12)

↓

┌─────────────────────────────────┐
│                                 │
│         AUSGABE                 │
│                                 │
│  Schleifscheibenkonditionierung │
│                                 │
│            $a_d$                │
│            $v_{fd}$             │
│            $v'_{fd}$            │
│            $q$                  │
│            $r_s$                │      ──126
│            $T_S$                │
│            $G$                  │
│            $N_{kin}$            │
│            $V_{ES}$             │
│            $f_g$                │
│            $F_K$                │
│                                 │
└─────────────────────────────────┘
                  │
                  ↓
┌─────────────────────────────────┐
│                                 │
│         AUSGABE                 │
│                                 │
│     Bearbeitungsparameter       │
│            W                    │
│     Schleifscheibentype         │
│                                 │      ──127
│            $v_C$                │
│            $\omega$             │
│            $V_{WG}$             │
│            $Q'_{wi}$            │
│            $t_h$                │
│                                 │
└─────────────────────────────────┘
                  │
                  ↓     ──128
              ( ENDE )

2001P138EP